# EUROPEAN PATENT APPLICATION

(11) **EP 2 107 726 A1**
(43) Date of publication of application: **07.10.2009**
(21) Application number: 08720268.5
(22) Date of filing: 26.02.2008
(51) Int. Cl.: H04L 12/56, H04L 12/46, H04Q 7/38

(54) **COMMUNICATION METHOD, COMMUNICATION SYSTEM, MOBILE NODE, PROXY NODE, AND MANAGEMENT NODE**

(30) Priority: 27.02.2007 JP 2007047757; 22.10.2007 JP 2007273723
(71) Applicant: Panasonic Corporation, Kadoma-shi Osaka 571-8501 (JP)
(72) Inventor: ASO, Keigo c/o Panasonic Corp., IPROC, Chuo-ku, Osaka-shi, Osaka 540-6207 (JP); MORIMOTO, Testuro c/o Panasonic Corp., IPRIOC, Chuo-ku, Osaka-shi, Osaka 540-6207 (JP); UE, Toyoki c/o Panasonic Corp., IPROC, Chuo-ku, Osaka-shi, Osaka 540-6207 (JP); KOH, Tien Ming Benjamin c/o Panasonic Sing.Lab.Pte.Ltd., Tai Seng Ind.Est.Singapore 534415 (SG); LIM, Chun Keong Benjamin c/o Pan. Sin.Lab.Pte.Ltd., Tai Seng Ind. Est. Singapore 534415 (SG); NG, Chan Wah c/o Panasonin Sing. Labs., Pte.Ltd., Tai Seng Ind.Est. Singapore 534415 (SG); TAN, Pek Yew c/o Panasonic Sing.Labs., Pte.Ltd., Tai Seng Ind.Est. Singapore 534415 (SG)
(74) Representative: Kügele, Bernhard
(86) International application number: PCT/JP2008/000354
(87) International publication number: WO 2008/105176

(57) **Abstract**

A technique of acquiring a binding ID when a mobile node performs handover is disclosed. According to the technique, when an MN 10 is initially booted on a Non-3GPP network 30, a AAA server 50 generates and stores the binding ID, transmits it to a proxy node 31, and transmits, to the MN, allocation information indicating that the binding ID is allocated to the proxy node. When performing handover to a 3GPP network 20, the MN requests an HA 32 for the binding ID. Then, the HA requests the AAA server for the binding ID, and the AAA server transmits the binding ID to the HA. The HA receives the binding ID and transmits it to the MN.

## Description

### TECHNICAL FIELD

The present invention relates to a communication method, a communication system, a mobile node, a proxy node, and a management node, which are to acquire a binding ID when the mobile node performs handover.

### BACKGROUND ART

Mobile IPv6 (Non-Patent Document 1 cited below) exists as a host-based layer 3 mobility control protocol, while Proxy Mobile IPv6 (Non-Patent Document 2 cited below) exists as a network-based layer 3 mobility control protocol. In Mobile IPv6 as the host-based protocol, a mobile node (hereinafter, MN) itself does everything from moving detection to location information (care-of address, binding cache entry) registration. Further, if a MN is provided with multiple communication interfaces (hereinafter, interfaces), use of a multiple care-of address registration technique (Non-Patent Document 3 cited below) makes it possible to register multiple care-of addresses allocated to respective interfaces in association with one home address.
In this case, a binding unique identifier (hereinafter, BID or binding ID) is added to each binding cache to be registered. This BID is used as information for specifying a binding cache entry when the care-of address is registered, updated, or deleted.

On the other hand, in the network-based mobility control protocol (hereinafter, network-based protocol), since the mobility management of the MN is performed on the network side, the MN itself does not need to perform processing for mobility control. Therefore, when connecting to a network in a domain for which the network-based protocol is provided, the MN can operate as just an IPv6 node without the need to know the presence of a home agent (HA or LMA: Local Mobility Anchor, hereinafter, HA is used). A proxy node on the network side (PMA: Proxy Mobile Agent in PMIPv6 or MAG: Mobile Access Gateway, which is referred to as a proxy node or PMN below) performs mobility control on behalf of the MN.

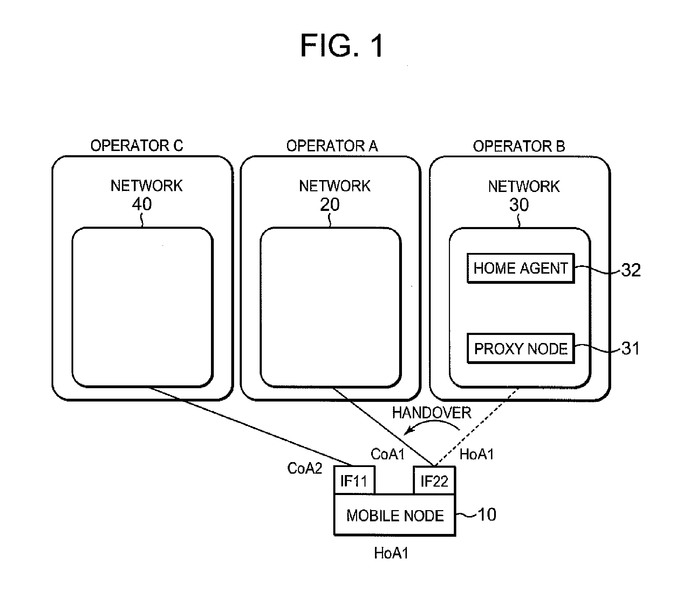

A network configuration shown in FIG. 1 will be described. In FIG. 1, there are two networks, namely a network 30 (operator B) with a network-based protocol and a network 20 (operator A) without any network-based protocol. Further, still another network 40 (operator C) exists. An MN (mobile node) 10 has an interface IF11 connectable to the network 40, and an interface IF22 connectable to both the network 30 and the network 20, so that the MN 10 can use the interface IF22 to perform handover between the networks 30 and 20. The MN 10 can also connect to the other network 40 using the other interface IF11. For the network 30, PMIPv6 (Proxy Mobile IPv6) is provided as a network-based protocol, for example, and a proxy node 31 and a home agent (hereinafter, HA) 32 exist to take charge of mobility control of the MN 10.

In order for the MN 10 to use the two interfaces IF11 and IF22 for communication, addresses respectively corresponding to the interfaces IF11 and IF22 must be registered in the HA as forwarding destinations in association with a home address HoA1 managed by the HA 32. When the MN 10 is connecting to the network 20, an address allocated to the interface IF22 is registered as a care-of address CoA1, while when it is connecting to the network 30, an address of the proxy node 31 is registered as a care-of address. Therefore, when the interface IF22 of the MN 10 is connecting to the network 30, the proxy node 31 transmits a location information registration message (Proxy Binding Update message), while when the MN 10 is connecting to the network 20, the MN 10 itself transmits a location information registration message (Binding Update message). At this time, if the interface IF11 of the MN 10 is connecting to the network 40, since plural binding caches are registered at the HA 32, the BID needs to be added to care-of addresses in respective location information registration messages.
Non-Patent Document 1: D. Johnson, C. Perkins, J. Arkko, "Mobility Support in IPv6," RFC3775, June 2004.
Non-Patent Document 2: S. Gundavelli, K. Leung, V. Devarapalli, "Proxy Mobile IPv6," draft-sgundave-mipv6-proxymipv6-00, 0ctober 2006.
Non-Patent Document 3: R. Wakikawa, T. Ernst, K. Nagami, "Multiple Care-of Addresses Registration," draft-ietf-monami6-multiplecoa-00.txt, June 2006.

When the interface IF11 of the MN 10 is connecting to the network 40, since the MN 10 itself registers the location information, the BID set by the MN 10 is added to a care-of address CoA2 to be registered. On the other hand, when the interface IF22 of the MN 10 is initially activated on the network 30, since the proxy node 31 registers the location information, the BID set by the proxy node 31 is added to the care-of address (address of the proxy node) to be registered. When the interface IF22 of the MN 10 is initially activated on the network 20, since the MN 10 itself registers the location information, the BID set by the MN 10 is added to the care-of address (CoA1) to be registered.

Suppose that when the MN 10 is connected to the network 40 through the interface IF11, the interface IF22 performs handover from the network 30 to the network 20. In this case, the location information before moving is registered by the proxy node 31. Therefore, when the MN 10 registers the location information after handover to the network 20, the BID used by the proxy node 31 before moving cannot be assigned for location information after moving of the MN 10 to be registered. Therefore, the HA 32 that has received the location information registration message cannot specify location information as a target to be replaced, or causes a problem of handling, as targets to be replaced, all the pieces of registered location information on the MN 10. Suppose further that when the MN 10 is connected to the network 40 through the interface IF11, the interface IF22 performs handover from the network 30 to the network 20. In this case, when the MN 10 registers the location information after handover to the network 20 without adding any BID, since the BID for specifying location information as a target to be replaced is not included in the message, the HA 32 that has received the location information registration message cannot specify location information as the target to be replaced, or causes the problem of handling, as the targets to replace, all the pieces of registered location information on the MN 10.

Further, when the MN 10 is connected to the network 40 through the interface IF11, if the interface IF22 performs handover from the network 20 to the network 30, the location information before moving is registered by the MN 10 itself. Therefore, when the proxy node 31 registers location information after handover to the network 30, since the BID used by the MN 10 before moving cannot be assigned for location information after moving of the MN 10 to be registered, location information as the target to be replaced cannot be specified, or this causes the problem of handling, as targets to be replaced, all the pieces of registered location information on the MN 10. Suppose further that when the MN 10 is connected to the network 40 through the interface IF11, the interface IF22 performs handover from the network 20 to the network 30. In this case, when the proxy node 31 registers location information after handover to the network 30 without adding any BID, since the BID for specifying location information as the target to be replaced is not included in the message, the HA 32 that has received the location information registration message cannot specify location information as the target to be replaced, or handles, as the targets to be replaced, all the pieces of registered location information on the MN 10, causing a problem of deleting all the pieces of registered location information.

When connecting to the network 30, the MN 10 receives a Router Advertisement in which its own home prefix is included, so that the MN 10 deletes the binding cache registered at the HA 32 according to Mobile IPv6 processing when connected to the home network. However, since the network-based protocol is provided in practice and location information is registered by the proxy node 31, the MN 10 must not delete the binding cache.
In other words, in the conventional techniques, when an MN having plural interfaces performs handover between a network with a network-based protocol and a network without any network-based protocol, location information may be updated by mistake.

### DISCLOSURE OF THE INVENTION

The present invention has been made in view of the above prior art problems, and it is an object thereof to provide a communication method, a communication system, a mobile node, a proxy node, and a management node, which prevent location information from being updated by mistake when an MN having plural interfaces performs handover between a network with a network-based protocol and a network without any network-based protocol.

In order to attain the above object, the communication method of the present invention is a communication method of acquiring a binding ID when a mobile node performs handover to a second network without any network-based mobility control protocol after the binding ID of the mobile node to connect to a first network with a network-based mobility control protocol is set for a proxy node of the first network, the method comprising:
a step in which the mobile node transmits a binding ID allocation request message to the proxy node of the first network;
a step in which the proxy node receives the binding ID allocation request message and transmit the binding ID allocation request message to a management node for managing the binding ID;
a step in which the management node receives the binding ID allocation request message, generates and stores the binding ID, and transmit the binding ID to the proxy node;
a step in which the proxy node receives the binding ID and transmits, to the mobile node, allocation information indicating that the binding ID is allocated;
a step in which the mobile node transmits a request message for the binding ID to the management node based on the allocation information when the mobile node performs handover from the first network to the second network;
a step in which the management node receives the request message for the binding ID from the mobile node; and
a step in which the management node transmits the binding ID to the mobile node.
The above method makes it possible to acquire the binding ID when the mobile node performs handover to the second network without any network-based mobility control protocol after the binding ID of the mobile node to connect to the first network with the network-based mobility control protocol is set for the proxy node of the first network.

In order to attain the above object, the communication system of the present invention is a communication system for acquiring a binding ID when a mobile node performs handover to a second network without any network-based mobility control protocol after the binding ID of the mobile node to connect to a first network with a network-based mobility control protocol is set for a proxy node of the first network, the system comprising:
means for allowing the mobile node to transmit a binding ID allocation request message to the proxy node of the first network;
means for allowing the proxy node to receive the binding ID allocation request message and transmit the binding ID allocation request message to a management node for managing the binding ID;
means for allowing the management node to receive the binding ID allocation request message, generate and store the binding ID, and transmit the binding ID to the proxy node;
means for allowing the proxy node to receive the binding ID and transmit, to the mobile node, allocation information indicating that the binding ID is allocated;
means for allowing the mobile node to transmit a request message for the binding ID to the management node based on the allocation information when the mobile node performs handover from the first network to the second network;
means for allowing the management node to receive the request message for the binding ID from the mobile node; and
means for allowing the management node to transmit the binding ID to the mobile node.
The above system makes it possible to acquire the binding ID when the mobile node performs handover to the second network without any network-based mobility control protocol after the binding ID of the mobile node to connect to the first network with the network-based mobility control protocol is set for the proxy node of the first network.

In order to attain the above object, the mobile node of the present invention is a mobile node in a communication system for acquiring a binding ID when the mobile node performs handover to a second network without any network-based mobility control protocol after a binding ID of the mobile node to connect to a first network with a network-based mobility control protocol is set for a proxy node of the first network, the mobile node comprising:
means for transmitting, on the first network, a binding ID allocation request message to the proxy node of the first network;
means for receiving allocation information after the proxy node receives the binding ID allocation request message and transmits the binding ID allocation request message to a management node for managing the binding ID, the management node receives the binding ID allocation request message, generates and stores the binding ID, and transmits the binding ID to the proxy node, and the proxy node receives the binding ID and transmits, to the mobile node, allocation information indicating that the binding ID is allocated;
means for transmitting a request message for the binding ID to the management node of the first network based on the allocation information when performing handover from the first network to the second network; and
means for receiving the binding ID when the management node receives the request message for the binding ID from the mobile node, and the management node transmits the binding ID to the mobile node.
The above mobile node makes it possible to acquire the binding ID when the mobile node performs handover to the second network without any network-based mobility control protocol after a binding ID of the mobile node to connect to the first network with the network-based mobility control protocol is set for the proxy node of the first network.

In order to attain the above object, the proxy node of the present invention is a proxy node in a communication system for acquiring a binding ID when a mobile node performs handover to a second network without any network-based mobility control protocol after a binding ID of the mobile node to connect to a first network with a network-based mobility control protocol is set for a proxy node of the first network, the proxy node comprising:
means for receiving a binding ID allocation request message and transmitting the binding ID allocation request message to a management node for managing the binding ID after the mobile node transmits, on the first network, the binding ID allocation request message to the proxy node of the first network; and
means for receiving the binding ID and transmitting, to the mobile node, allocation information indicating that the binding ID is allocated after the management node receives the binding ID allocation request message, generates and stores the binding ID, and transmits the binding ID to the proxy node.
The above proxy node makes it possible to acquire the binding ID when the moving node performs handover to the second network without any network-based mobility control protocol after a binding ID of the mobile node to connect to the first network with the network-based mobility control protocol is set for the proxy node of the first network.

In order to attain the above object, the communication method of the present invention may also be such that
the binding ID allocation request message is a message for requesting access authentication of the mobile node, and
the allocation information transmitted by the proxy node and indicating that the binding ID is allocated is a DHCP reply message.

Further, in order to attain the above object, the communication method of the present invention is a communication method of acquiring a binding ID when a mobile node performs handover to a second network without any network-based mobility control protocol after a binding ID of the mobile node to connect to a first network with a network-based mobility control protocol is set for a proxy node of the first network, the method comprising:
a step in which the mobile node transmits, on the first network, a binding ID request message to the proxy node of the first network;
a step in which the proxy node receives the binding ID request message and transmit the binding ID request message to a management node for managing the binding ID;
a step in which the management node receives the binding ID request message, and generates and transmits the binding ID to the proxy node; and
a step in which the proxy node receives the binding ID and transmit the binding ID to the mobile node.
The above communication method makes it possible to acquire the binding ID when the mobile node performs handover to the second network without any network-based mobility control protocol after a binding ID of the mobile node to connect to the first network with the network-based mobility control protocol is set for the proxy node of the first network.

In order to attain the above object, the communication system of the present invention is a communication system for acquiring a binding ID when a mobile node performs handover to a second network without any network-based mobility control protocol after a binding ID of the mobile node to connect to a first network with a network-based mobility control protocol is set for a proxy node of the first network, the system comprising:
means for allowing the mobile node to transmit, on the first network, a binding ID request message to the proxy node of the first network;
means for allowing the proxy node to receive the binding ID request message and transmit the binding ID request message to a management node for managing the binding ID;
means for allowing the management node to receive the binding ID request message, and generate and transmit the binding ID to the proxy node; and
means for allowing the proxy node to receive the binding ID and transmit the binding ID to the mobile node.
The above communication system makes it possible to acquire the binding ID when the mobile node performs handover to the second network without any network-based mobility control protocol after a binding ID of the mobile node to connect to the first network with a network-based mobility control protocol is set for the proxy node of the first network.

In order to attain the above object, the mobile node of the present invention is a mobile node in a communication system for acquiring a binding ID when the mobile node performs handover to a second network without any network-based mobility control protocol after a binding ID of the mobile node to connect to a first network with a network-based mobility control protocol is set for a proxy node of the first network, the mobile node comprising:
means for transmitting, on the first network, a binding ID request message to the proxy node of the first network; and
means for receiving the binding ID after the proxy node receives the binding ID request message and transmits the binding ID request message to a management node for managing the binding ID, the management node receives the binding ID request message, and generates and transmits the binding ID to the proxy node, and the proxy node receives the binding ID and transmits the binding ID to the mobile node.
The above mobile node makes it possible to acquire the binding ID when the mobile node performs handover to the second network without any network-based mobility control protocol after a binding ID of the mobile node to connect to the first network with the network-based mobility control protocol is set for the proxy node of the first network.

In order to attain the above object, the proxy node of the present invention is a proxy node in a communication system for acquiring a binding ID when a mobile node performs handover to a second network without any network-based mobility control protocol after a binding ID of the mobile node to connect to a first network with a network-based mobility control protocol is set for a proxy node of the first network, the proxy node comprising:
means for receiving a binding ID request message and transmitting the binding ID request message to a management node for managing the binding ID after the mobile node transmits, on the first network, the binding ID request message to the proxy node of the first network; and
means for receiving the binding ID and transmitting the binding ID to the mobile node after the management node receives the binding ID request message, and generates and transmits the binding ID to the proxy node.
The above proxy node makes it possible to acquire the binding ID when the mobile node performs handover to the second network without any network-based mobility control protocol after a binding ID of the mobile node to connect to the first network with the network-based mobility control protocol is set for the proxy node of the first network.

In order to attain the above object, the communication method of the present invention may also be such that
the binding ID request message is a message for requesting access authentication of the mobile node, and
the binding ID transmitted by the proxy node is included in a DHCP reply message.

Further, in order to attain the above object, the communication method of the present invention is a communication method in which a proxy node of a first network with a network-based mobility control protocol acquires a binding ID when a mobile node performs handover to the first network after a binding ID of the mobile node is assigned on a second network without any network-based mobility control protocol, the method comprising:
a step in which the mobile node transmits, on the second network, a binding ID request message to a management node for managing the binding ID of the first network;
a step in which the management node receives the binding ID request message, and generates and stores the binding ID;
a step in which the mobile node transmits a binding ID acquisition request message to the proxy node of the first network when performing handover from the second network to the first network;
a step in which the proxy node receives the binding ID acquisition request message and transmits the binding ID acquisition request message to the management node; and
a step in which the management node receives the binding ID acquisition request message and transmits the stored binding ID to the proxy node.
The above communication method makes it possible for the proxy node of the first network with the network-based mobility control protocol to acquire a binding ID of the mobile node when the mobile node performs handover to the first network after the binding ID is assigned on the second network without any network-based mobility control protocol.

In order to attain the above object, the communication system of the present invention is a communication system in which a proxy node of a first network with a network-based mobility control protocol acquires a binding ID when a mobile node performs handover to the first network after a binding ID of the mobile node is assigned on a second network without any network-based mobility control protocol, the system comprising:
means for allowing the mobile node to transmit, in the second network, a binding ID request message to a management node for managing the binding ID of the first network;
means for allowing the management node to receive the binding ID request message, and generate and store the binding ID;
means for allowing the mobile node to transmit a binding ID acquisition request message to the proxy node of the first network when performing handover from the second network to the first network;
means for allowing the proxy node to receive the binding ID acquisition request message and transmit the binding ID acquisition request message to the management node; and
means for allowing the management node to receive the binding ID acquisition request message and transmit the stored binding ID to the proxy node.
The above communication system makes it possible for the proxy node of the first network with the network-based mobility control protocol to acquire the binding ID when the mobile node performs handover to the first network after the binding ID is assigned on the second network without any network-based mobility control protocol.

In order to attain the above object, the mobile node of the present invention is a mobile node in a communication system in which a proxy node of a first network with a network-based mobility control protocol acquires a binding ID when the mobile node performs handover to the first network after a binding ID of the mobile node is assigned on a second network without any network-based mobility control protocol, the mobile node comprising:
means for transmitting, on the second network, a binding ID request message to a management node for managing the binding ID of the first network, wherein the management node receives the binding ID request message, and generates and stores the binding ID; and
means for transmitting a binding ID acquisition request message to the proxy node of the first network when performing handover from the second network to the first network, wherein the proxy node receives the binding ID acquisition request message and transmits the binding ID acquisition request message to the management node, and the management node receives the binding ID acquisition request message and transmits the stored binding ID to the proxy node.
The above mobile node makes it possible for the proxy node to acquire the binding ID when the mobile node performs handover to the second network without any network-based mobility control protocol after a binding ID of the mobile node to connect to the first network with the network-based mobility control protocol is set for the proxy node of the first network.

In order to attain the above object, the proxy node of the present invention is a proxy node in a communication system in which the proxy node of a first network with a network-based mobility control protocol acquires a binding ID when a mobile node performs handover to the first network after a binding ID of the mobile node is assigned on a second network without any network-based mobility control protocol, the proxy node comprising:
means for receiving a binding ID acquisition message after the mobile node transmits, on the second network, the binding ID acquisition message to a management node for managing the binding ID of the first network, the management node receives the binding ID acquisition message, and generates and stores the binding ID, and the mobile node performs handover from the second network to the first network; and
means for receiving the binding ID after the management node receives the binding ID acquisition message and transmits the stored binding ID to the proxy node.
The above proxy node of the first network with the network-based mobility control protocol can acquire the binding ID when the mobile node performs handover to the first network after the binding ID is assigned on the second network without any network-based mobility control protocol.

The communication method of the present invention may also such that the binding ID acquisition request message is a message for requesting access authentication of the mobile node.
Further, when the proxy node transmits the binding ID to the mobile node, the proxy node may transmit a DHCP reply message responding to a DHCP response message.
Further, when the proxy node transmits the binding ID to the mobile node, the proxy node may transmit an access authentication complete message responding to an access authentication request message from the mobile node.

Further, the communication method of the present invention is a communication method for replacing location information when a first interface of a mobile node, connectable to a first network with a network-based mobility control protocol and a second network without any network-based mobility control protocol, performs handover to the second network after the location information is registered by a proxy node while the first interface of the mobile node is connecting to the first network, the method comprising:
a step of transmitting, to a management node for managing the location information, a binding update message for requesting replacement of the location information, with home network connection information before moving added thereto, the home network connection information before moving indicating that the network before moving was a home network, when the first interface of the mobile node performs handover from the first network to the second network; and
a step of allowing the management node that has received the binding update message to transmit, to the mobile node, a binding ID corresponding to the replaced location information.

Further, the communication system of the present invention is a communication system for replacing location information when a first interface of a mobile node, connectable to a first network with a network-based mobility control protocol and a second network without any network-based mobility control protocol, performs handover to the second network after the location information is registered by a proxy node while the first interface of the mobile node is connecting to the first network, the system comprising:
means for transmitting, to a management node for managing the location information, a binding update message for requesting replacement of the location information, with home network connection information before moving added thereto, the home network connection information before moving indicating that the network before moving was a home network, when the first interface of the mobile node performs handover from the first network to the second network; and
means for allowing the management node that has received the binding update message to transmit, to the mobile node, a binding ID corresponding to location information replaced.

Further, the mobile node of the present invention is a mobile node in a communication system for replacing location information when a first interface of the mobile node, connectable to a first network with a network-based mobility control protocol and a second network without any network-based mobility control protocol, performs handover to the second network after the location information is registered by a proxy node while the first interface of the mobile node is connecting to the first network, the mobile node comprising:
means for transmitting, to a management node for managing the location information, a binding update message for requesting replacement of the location information, with home network connection information before moving added thereto, the home network connection information before moving indicating that the network before moving was a home network, when the first interface of the mobile node performs handover from the first network to the second network; and
means for receiving, from the management node that has received the binding update message, a binding ID corresponding to the replaced location information.

Further, the management node of the present invention is a management node for managing location information in a communication system for replacing the location information when a first interface of a mobile node, connectable to a first network with a network-based mobility control protocol and a second network without any network-based mobility control protocol, performs handover to the second network after the location information is registered by a proxy node while the first interface of the mobile node is connecting to the first network, the management node comprising:
means for receiving, from the mobile node, a binding update message for requesting replacement of the location information together with home network connection information before moving, which indicates that the network before moving was a home network, when the first interface of the mobile node performs handover from the first network to the second network; and means for transmitting, to the mobile node, a binding ID corresponding to the replaced location information.

According to the present invention, when the mobile node performs handover to the second network without any network-based mobility control protocol after a binding ID of the mobile node to connect to the first network with the network-based mobility control protocol is set for the proxy node of the first network, the binding ID can be acquired, thereby preventing location information from being updated by mistake when an MN having plural interfaces performs handover between a network with a network-based protocol and a network without any network-based protocol.
Further, when the mobile node performs handover to the first network with the network-based mobility control protocol after the binding ID is assigned on the second network without any network-based mobility control protocol, the proxy node of the first network can acquire the binding ID, thus preventing location information from being updated by mistake when an MN having plural interfaces performs handover between a network with a network-based protocol and a network without any network-based protocol.

### BRIEF DESCRIPTION OF THE DRAWINGS

[FIG. 1] It is a block diagram showing a network configuration according to a first embodiment of the present invention and a conventional technique.
[FIG. 2] It is an explanatory diagram showing a communication sequence according to the first embodiment of the present invention.
[FIG. 3] It is a block diagram showing the structure of a mobile node according to the first embodiment of the present invention.
[FIG. 4] It is a block diagram showing the structure of a proxy node according to the first embodiment of the present invention.
[FIG. 5] It is a block diagram showing the structure of a AAA server according to the first embodiment of the present invention.
[FIG. 6] It is an explanatory diagram showing a communication sequence according to a second embodiment of the present invention.
[FIG. 7] It is an explanatory diagram showing a communication sequence according to a third embodiment of the present invention.
[FIG. 8] It is a block diagram showing the structure of a mobile node according to the third embodiment of the present invention.
[FIG. 9] It is a block diagram showing the structure of a proxy node according to the third embodiment of the present invention.
[FIG. 10] It is a block diagram showing a network configuration according to a fourth embodiment of the present invention.
[FIG. 11] It is an explanatory diagram showing a communication sequence according to the fourth embodiment of the present invention.
[FIG. 12] It is a block diagram showing an alternate embodiment of the network of FIG. 1.
[FIG. 13] It is a block diagram showing another alternate embodiment of the network of FIG. 1.
[FIG. 14] It is a flowchart for explaining processing performed by an IKE request message generating section of FIG. 3.
[FIG. 15] It is a block diagram showing the structure of a home agent according to the first embodiment of the present invention.
[FIG. 16] It is a block diagram showing a network configuration according to a fifth embodiment of the present invention.
[FIG. 17] It is a block diagram showing an alternate embodiment of the network of FIG. 16.
[FIG. 18] It is a block diagram showing another alternate embodiment of the network of FIG. 16.
[FIG. 19] It is a flowchart for explaining processing performed by an IEK request message generating section according to the fifth embodiment of the present invention.
[FIG. 20] It is a block diagram showing a specific example of the network configuration according to the fifth embodiment of the present invention.
[FiG. 21] It is an explanatory diagram showing an MN binding cache entry (BCE) held by an LMA of FIG. 20
[FIG. 22] It is a block diagram showing a network configuration according to a sixth embodiment of the present invention.
[FIG. 23] It is an explanatory diagram showing an example of the format of a BU message according to the present invention.
[FIG. 24] It is an explanatory diagram showing another example of the format of the BU message according to the present invention.
[FIG. 25] It is an explanatory diagram showing a communication sequence according to a seventh embodiment of the present invention.
[FIG. 26] It is a block diagram showing the structure of a mobile node according to the seventh embodiment of the present invention.
[FIG. 27] It is an explanatory diagram showing an RS message according to the seventh embodiment of the present invention.
[FIG. 28] It is a flowchart showing processing performed by the mobile node according to the seventh embodiment of the present invention.
[FIG. 29] It is a block diagram showing the structure of a proxy node according to the seventh embodiment of the present invention.
[FIG. 30] It is a block diagram showing the structure of a home agent according to the seventh embodiment of the present invention.
[FIG. 31] It is an explanatory diagram showing a communication sequence according to an eighth embodiment of the present invention.

### BEST MODE FOR CARRYING OUT THE INVENTION

Embodiments of the present invention will be described below with reference to the drawings.
FIG. 1 is a block diagram showing a network configuration according to a first embodiment of the present invention. A network 40 without any network-based protocol is, as an example, a 3GPP (3 rd Generation Partnership Project) network, such as a cellular network. A network 30 with a network-based protocol is, as an example, a network such as wireless LAN (802.11 a/b/g/n), WiMAX, or Bluetooth (registered trademark). Similarly, a network 20 without any network-based protocol is, as an example, a network such as wireless LAN (802.11 a/b/g/n), WiMAX, or Bluetooth (registered trademark).

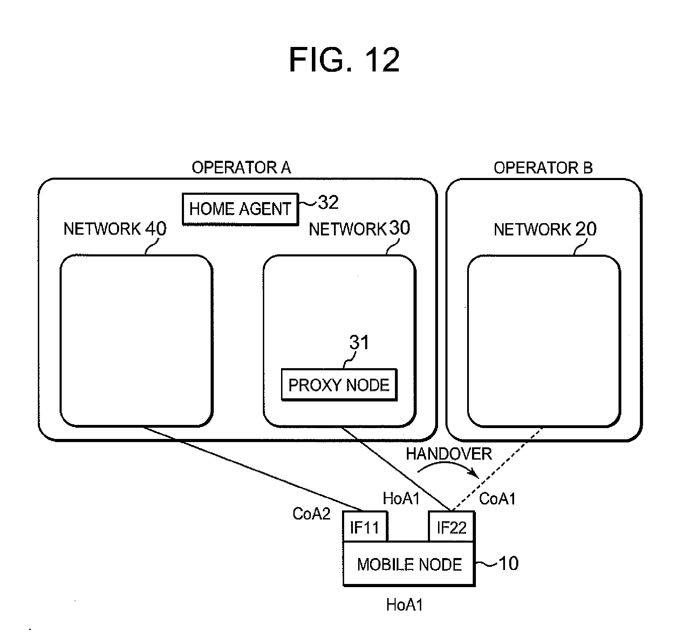

As shown in FIG. 12, the network 40 and the network 30 may be provided by the same operator A, and in that case, a home agent 32 becomes a home agent shared among all the networks 20, 30, and 40. The network 40 provided by Operator A is, as an example, a cellular network, and the network 30 with the network-based protocol is, as an example, a network such as wireless LAN (802.11 a/b/g/n), WiMAX, or Bluetooth (registered trademark). Similarly, the network 20 without any network-based protocol of Operator B is, as an example, a network such as wireless LAN (802.11 a/b/g/n), WiMAX, or Bluetooth (registered trademark). It may be assumed that Operator A in FIG. 12 is a 3GPP operator and Operator B is a non-3GPP operator.

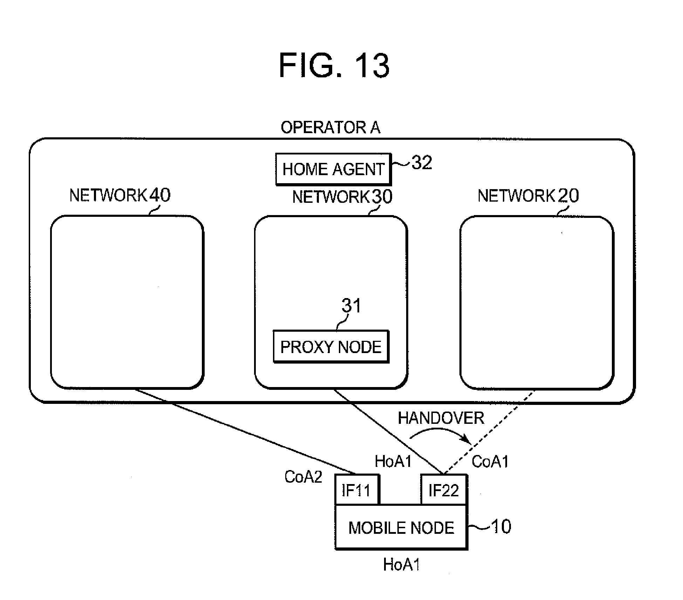

As shown in FIG. 13, all the networks 20, 30, and 40 may be provided by the same operator A, and in that case, the home agent 32 also becomes a home agent shared among all the networks 20, 30, and 40. The network 40 is, as an example, a cellular network, and the network 30 with the network-based protocol 30 is, as an example, a network such as wireless LAN (802.11 a/b/g/n), WiMAX, or Bluetooth (registered trade mark). Similarly, the network 20 without any network-based protocol 20 is, as an example, a network such as wireless LAN (802.11 a/b/g/n), WiMAX, or Bluetooth (registered trademark). In FIG. 1, FIG. 12, and FIG. 13, addresses acquired upon connection to the network 30 and the network 40 may be the same address. In that case, Operator A has the function of managing the moving of an MN 10 within the coverage of operator A to which the IF11 and the IF22 of the MN 10 are connected.

In the above network configuration, the network 20 and the network 40 are assumed to be networks without any network-based protocol, but there may also be a case where a network-based protocol(s) is provided but the MN 10 is not using the protocol. In other words, the MN in the first embodiment of the present invention uses the network-based protocol on the network 30, but does not use the protocol on the network 20.

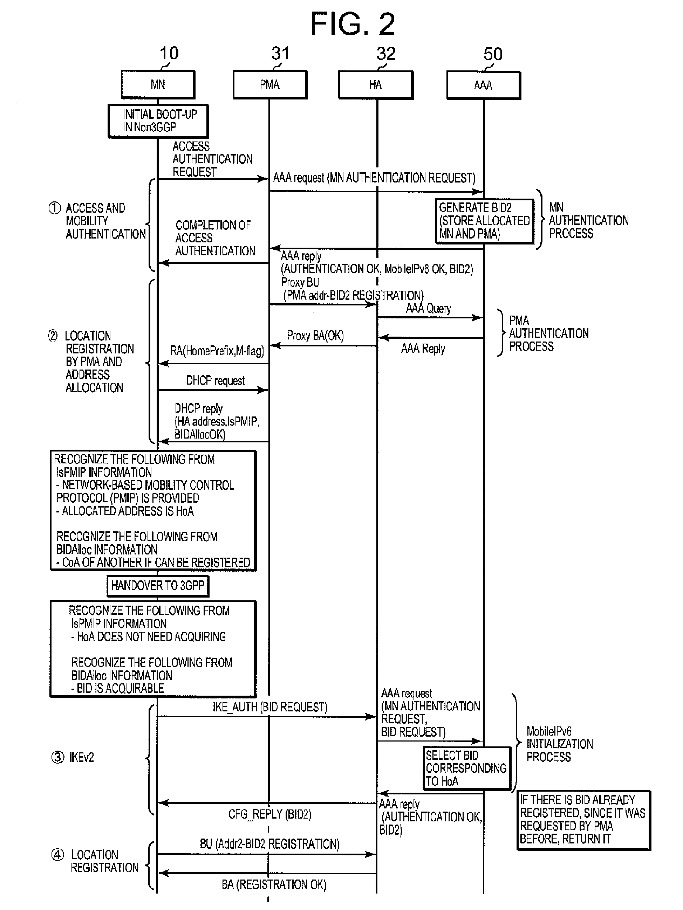

FIG. 2 shows, as a communication sequence according to the first embodiment of the present invention, a communication sequence when the MN 10 performs handover to the network 20 after the MN 10 is initially booted on the network 30 and the BID is assigned by a proxy node 31 (PMA: Proxy Mobile Agent, MAG:
Mobile Access Gateway, although the following uses the proxy node or PMA, both refer to the same thing). Note that circled numbers in FIG. 2 are indicated by numbers in parentheses in this specification.

### <In the case of initial boot-up on network 30>

(1) Access and mobility authentication
   - When initially booted on the network 30, the MN 10 transmits, to the PMA 31, an access authentication request message ("message" is omitted in the following description and the communication sequence diagram).
   - When receiving the access authentication request from the MN 10, the PMA 31 transmits an MN authentication request as a AAA request to a AAA (Authentication, Authorization, Accounting) server 50.
   - When receiving the AAA request (MN authentication request) from the PMA 31, the AAA server 50 performs an MN authentication process to generate the BID 2, stores the MN 10 with the BID 2 allocated thereto and the PMA 31, and notifies the PMA 31, with a AAA reply, of authentication OK, Mobile IPv6 OK, and the BID 2.
   - When receiving the AAA reply from the AAA server 50, the PMA 31 notifies the MN 10 of completion of access authentication.

(2) Location registration by PMA and address allocation
   - The PMA 31 transmits a Proxy BU (Binding Update) to the HA 32 to register an address of the PMA 31 (PMA addr) and the BID 2.
   - After receiving this, the HA 32 transmits a AAA Query to the AAA server 50, and when receiving the AAA Query, the AAA server 50 transmits a AAA reply to the HA 32 to perform a PMA authentication process.
   - When receiving the AAA reply from the AAA server 50, the HA 32 transmits a Proxy BA (Binding Acknowledgement) to the PMA 31.
   - When receiving, from the HA 32, the Proxy BA indicating that the registration of the location information is OK, the PMA 31 transmits an RA (Router Advertisement) to the MN 10 to notify the MN 10 of a Home Prefix and an M flag.
   - When receiving the RA from the PMA 31, the MN 10 transmits a DHCP (Dynamic Host Configuration Protocol) request to the PMA 31.
   - When receiving the DHCP request from the MN 10, the PMA 31 transmits a DHCP reply to the MN 10 to notify the MN 10 of an address of the HA 32 (HA address), IsPMIP information indicating that it is located on a PMIP network, and BID allocation OK (BIDAIIocOK) indicating that the BID is allocated, together with the address allocated to the MN10.
   The IsPMIP information and the BID Alloc information may be included in the RA. Further, if the M flag of the RA is not set, the MN 10 may automatically generate an address without acquiring the address with the DHCP.

When receiving the DHCP reply from the PMA 31, the MN 10 recognizes the following from the IsPMIP information:
- A network-based mobility control protocol (PMIP) is provided.
- The allocated address is HoA.
   The MN 10 also recognizes the following from the BIDAlloc information:

- CoA of another IF can be registered.

### <Handover to network 20>

When performing handover to the network 20, the MN 10 recognizes the following from the IsPMIP information:
- HoA does not need to be acquired.
   The MN 10 also recognizes the following from the BIDAlloc information:

- BID can be acquired.

(3) Generation of SA (Security Association): IKE (Internet Key Exchange) v2
   - When performing handover to the network 20, the MN 10 transmits IKE_AUTH as an IKE request message to the HA 32 to request the BID.
   - When receiving the IKE_AUTH from the MN 10, the HA 32 transmits a AAA request to the AAA server 50 to request MN authentication and a BID, and when receiving this AAA request, the AAA server 50 selects the BID corresponding to the HoA, and transmits a AAA reply to the HA 32 to notify the HA 32 of authentication OK and the BID 2, thereby performing a Mobile IPv6 initialization process. At this time, if the AAA server 50 has the BID already registered, since the BID has been previously requested by the PMA 31, the AAA server 50 returns the BID.
   - When receiving the AAA reply from the AAA server 50, the HA 32 transmits, to the MN 10, CFG_REPLY as an IKE response message to notify the MN 10 of the BID 2.
Note that the MN 10 may start IKEv2 while connecting to the network 30 before handover. In that case, the BU message can be transmitted to register location information immediately after handover to the network 20 and completion of access authentication.

(4) Location registration
   - When receiving CFG_REPLY from the HA 32, the MN 10 transmits the BU to the HA 32 to register Addr2 and the BID 2.
   - When receiving BU from the MN 10, the HA 32 updates location information corresponding to the BID 2 from among pieces of registered location information on the MN, and transmits BA to the MN 10 to notify the MN 10 that the location registration is OK.

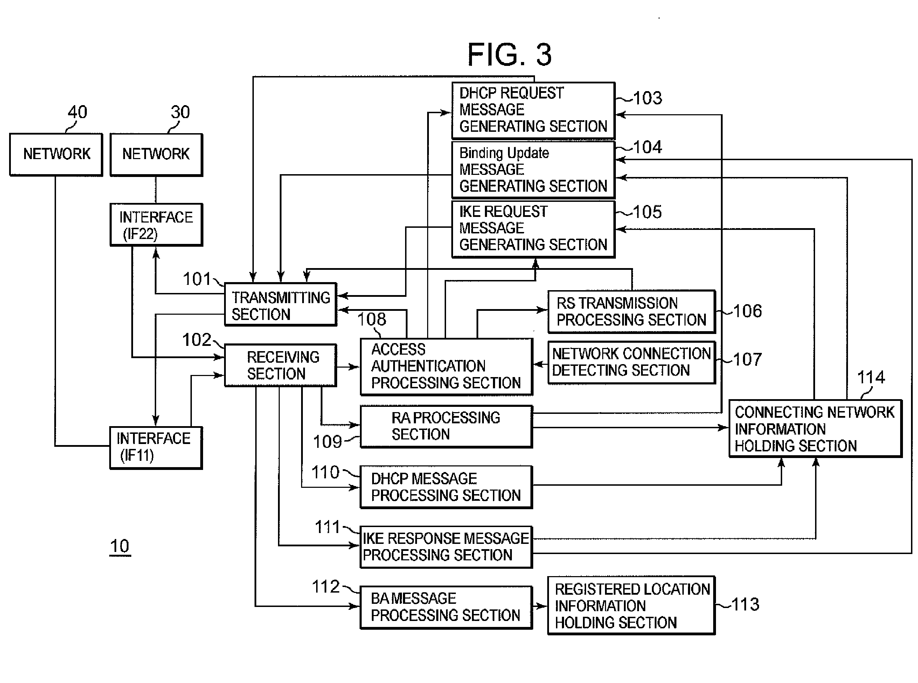

FIG. 3 is block diagram showing the structure of the MN 10. The MN 10 has, in addition to the above-mentioned interfaces IF11 and IF22, a transmitting section 101, a receiving section 102, a DHCP request message generating section 103, a Binding Update(BU) message generating section 104, an IKE request message generating section 105, an RS(Router Solicitation) transmission processing section 106, a network connection detecting section 107, an access authentication processing section 108, an RA (Router Advertisement) processing section 109, a DHCP message processing section 110, an IKE response message processing section 111, a BA (Binding Acknowledgement) message processing section 112, a registered location information holding section 113, and a connecting network information holding section 114.

The following describes main components provided in the MN 10. The RS transmission processing section 106 receives a notification of completion of access authentication from the access authentication processing section 108, generates an RS message for requesting the currently connecting network 20, 30, or 40 to transmit an RA message, and instructs the transmitting section 101 to transmit the RS message. If the RA message can be received before the RS message is transmitted, the RS message does not need transmitting. The DHCP request message generating section 103 generates a DHCP request message and instructs the transmitting section 101 to transmit the DHCP request message to the currently connecting network 20, 30, or 40 when receiving a notification of completion of access authentication from the access authentication processing section 108, or when receiving an instruction to start DHCP from the RA processing section 109.

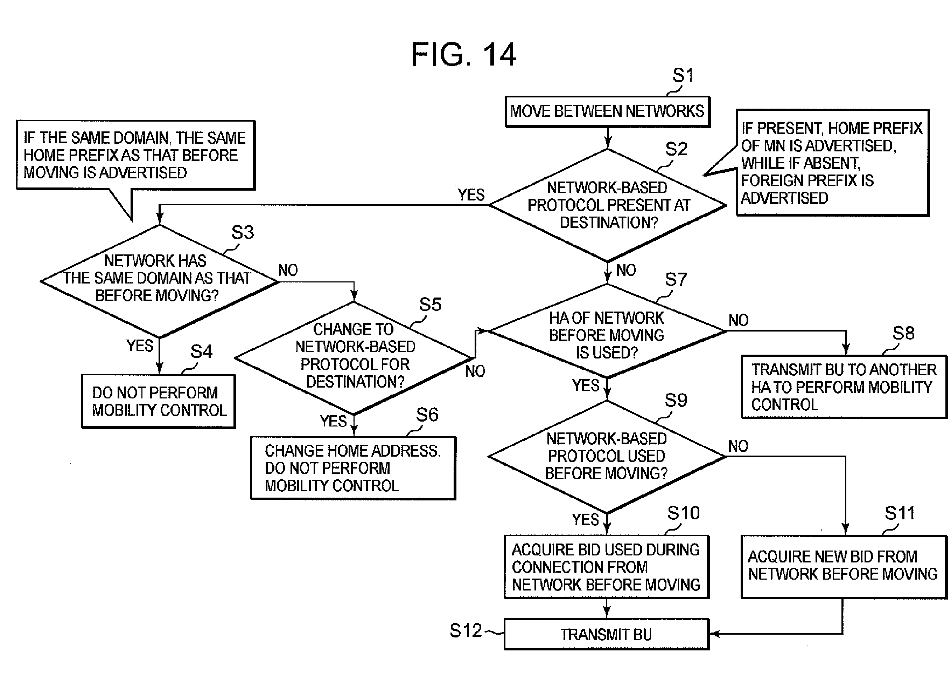

The IKE request message generating section 105 receives a notification from the access authentication processing section 108 of completion of access authentication after the IF 22 performs handover from the network 30 to the network 20, and starts IKEv2 to generate Security Association (SA) with its own home agent. At that time, determinations shown in FIG. 14 are made to generate an IKE request message (CFG_REQUEST) as a message for requiring acquisition/notification of a BID and transmit the IKE request message to which information requesting the notification of the BID is added.

Determination processing shown in FIG. 14 will be described. Upon moving between networks (step S1), it is determined whether a destination network provides a network-based protocol (network-based mobility control protocol) (step S2). Here, if YES, the home prefix of the MN 10 is advertised, while if NO, a foreign prefix is advertised. Thus, this determination can be made. In step S2, if there is no network-based protocol in the destination network, processing proceeds to step S7 to be described later. On the other hand, if there is a network-based protocol, it is determined whether the destination network has the same domain as the network before moving (step S3). Here, if the same domain, since the same home prefix as that of the network before moving is advertised throughout the destination network, this determination can be made. In step S3, if the same domain, mobility control is not performed (step S4). On the other hand, if not the same domain in step S3, it is determined whether to change to the network-based protocol of the destination network (step S5). If to change, the home address is changed but mobility control is not performed (step S6). On the other hand, if not to change, processing proceeds to step S7.

In step S7, it is determined whether to use an HA of the network before moving. If not to use, BU is transmitted to another HA to perform mobility control (step S8). Alternatively, in step S8, BU may not be transmitted to another HA not to perform mobility control. On the other hand, if to use the HA of the network before moving, it is determined whether the network before moving used a network-based protocol (step S9). If used, a BID used during connection is acquired from the network before moving (step S10), and BU including this acquired BID is transmitted (step S12). On the other hand, if not used in step S9, new BID is acquired from the network before moving (step S11), and BU including this BID is transmitted (step S12). In step S11, if mobility control was performed by itself on the network before moving, the BID used on the network before moving continues to be used.

The IKE response message processing section 111 acquires the BID included in the response message (CFG_REPLY) as a reply to the IKE request message (CFG_REQUEST), and instructs the connecting network information holding section 114 to hold the BID. The message for requesting acquisition/notification of a BID may be an RS message, an NS (Neighbor Solicitation) message, a DHCP request message, or a BU message. In that case, the MN 10 transmits any of these messages to which information (flag or the like) for requesting notification of a BID is added, and the PMA 31 that has received the information acquires a BID used for location registration of the MN 10 from the authentication result holding sections 142 or a binding update list, and notifies the MN 10 of the BID using the RA message, the NA (Neighbor Advertisement) message, the DHCP reply message, or the BA message. The message may be transmitted before moving, i.e., during connection to the network 30, as well as after moving.

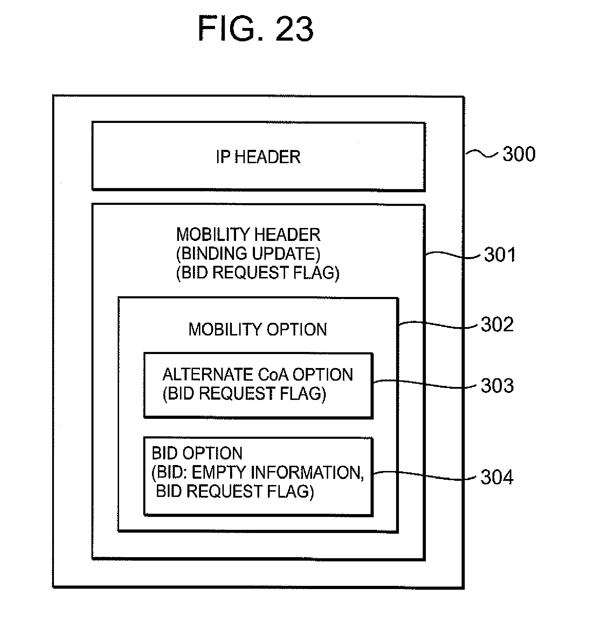

The Binding Update message generating section 104 receives a notification of completion of SA generation and the BID acquisition from the IKE response message processing section 111 after the IF22 performs handover from the network 30 to the network 20. When registering location information, the Binding Update message generating section 104 acquires the BID allocated from the network 30 and held in the connecting network information holding section 114 and generates the BU message for registering a care-of address with the BID added thereto. If the BU message is used as the message for requesting acquisition/notification of the BID, the Binding Update message generating section 104 transmits, to the HA 32, the BU message without a BID. The HA 32 that has received the BU message specifies location information previously registered by the PMA 31, replaces the location information by new location information, acquires the BID added to the old location information from a BC (Binding Cache), and transmits the BA message including the BID.
When no BID is added to the location information as a target to be replaced, or when there is no location information as the target to be replaced, the HA 32 generates new BID and transmits a BA message including the BID. As a technique for acquisition/notification of a BID, the HA 32 may request the AAA server or an information server holding information on the MN 10 to acquire or generate a BID. The MN that has received this BA message uses the BID included in the received BA message for subsequent registration of location information. As shown in FIG. 23, the BU message 300 in this case includes an option 304 for notification of a BID and whose field portion to include a BID is empty (zero value). This option 304 may be used as information for requesting acquisition of a BID, or information indicative of a request for acquisition of a BID may be added into a mobility header 301 or the option 304 for notification of a BID, or both may be combined. In addition, a flag indicative of a request for a BID may be included in a CoA option 303.
The BA message processing section 112 performs processing related to receiving of the BA message including the BID allocated from the location information of the IF22 and the network 30 generated and transmitted by the Binding Update message generating section 104. The BA message includes information indicative of completion of location information registration, and the registered location information holding section 113 is instructed to hold the location information registered at the HA 32. If the BU message is used as the message for acquisition/notification of a BID, the BA message includes the BID allocated from the network 30 as well as the result indicative of completion of location information registration, and the registered location information holding section 113 is instructed to hold the location information registered at the HA 32 together with the allocated BID. The registered location information holding section 113 receives an instruction from the BA message processing section 112 to hold the registered location information as information indicating registered location information. If the BID allocated by the BA message is to be acquired, the BID is also held.

The RA processing section 109 processes the RA messages received from a router (PMA 31 or the like) on the network 20, 30, or 40 to connect, acquires IsPMIP information and BID Allocation information (BIDAlloc information) included in this RA message, and instructs the connecting network information holding section 114 to hold the information. The IsPMIP information is information indicating, to the MN 10, whether the network 20, 30, or 40 side is a network that provides a network-based mobility control protocol. The information can be presented using a flag or the like. In the case of the flag, a new IsPMIP flag may be provided in a Reserved field of the RA message, or in a Reserved field within a Prefix Information Option added to the RA message. When the RS message is used as the message for requesting acquisition/notification of a BID, since a BID is included in the received RA message, the RA processing section 109 instructs the connecting network information holding section 114 to hold the acquired BID in the same manner as the IKE response message processing section 111.

When receiving, from the network, the RA message with the IsPMIP information set therein, the MN 10 recognizes that network-based mobility control protocol (PMIP) is operating on the connecting network and the acquired address is its own home address. Therefore, the MN 10 itself does not need to register location information related to the IF22 connecting to the network 30, and recognizes that it does not need to perform both processing for finding out the address of the home agent 32 and processing for generating Security Association with the home agent 32. Especially, when the IF11 is not connecting to the network 40, if the MN 10 is connecting to the network 30, since the MN 10 does not need to know the address of the home agent 32 at all, this effect is large. After the IF22 performs handover, the MN 10 needs to know the address of the home agent 32 because of the need to register location information by itself, but yet it does not need to do before handover. Since it can be done after handover, the MN 10 does not need to know the address of the home agent 32 while connecting to the network 30.

However, when the IF11 is connecting to the network 40, even if the IF22 is connecting to the network 30, the MN 10 needs to know the address of the home agent 32 to register location information on the IF11 by itself, so that the MN 10 is required to acquire the address of the home agent 32. The following three methods are dominant as methods of acquiring the address of the home agent 32. Note that the sequence diagram of FIG. 2 shows case (1).
(1) The MN 10 acquires the address of the home agent 32 via the network 30 connected before handover,
(2) it acquires the address of the home agent 32 via the network 20 connected after handover, or
(3) it acquires the address of the home agent 32 via the network 40 to which the IF11 is being connected.

For acquisition before handover, the AAA server 50 allocates the home agent 32 to the MN 10 during the access authentication process, and notifies the proxy node 31 of the result so that the MN 10 can eventually acquire the address of home agent 32 allocated from the network 30 side using DHCP. For acquisition after handover, a domain name of the operator that provides the home agent 32 is inquired from a DNS (Domain Name System) server (not shown) after completion of access authentication to the connecting network to acquire the address of the home agent 32. For acquisition via the network 40, the DNS server can also be inquired in the same manner to acquire the address of the home agent 32.

The MN 10 in the first embodiment may acquire the address of the home agent 32 using any of the above-mentioned three methods. In the case of acquisition via the network 30, the DHCP response message includes the address of the home agent 32 as well as the address allocated to the MN 10. Therefore, the MN 10 compares the prefix of the address of the home agent 32 with the address allocated to itself or the prefix in the RA message so that the MN 10 can recognize that, when both match, the allocated address is the home address.

However, in this case, the MN 10 can recognize that it is the home network, but whether the network provides the network-based mobility control protocol remains unknown. Therefore, if there is no IsPMIP information, the MN 10 will try to perform operations (delete all binding caches registered in the HA 32 or generate and register a care-of address from the home prefix, and register information indicating that it is connecting to the home network, etc.) to be performed when connecting to the home network as specified in Mobile IPv6 or a care-of address registration technique. However, this can be avoided by notifying the MN 10 of the IsPMIP information.

The BID Allocation information is information indicating whether the proxy node 31 providing the network-based mobility control protocol has registered, at the home agent 32, location information on the MN 10 by adding the BID, i.e., whether it is information indicating that the MN 10 is a node permitted to register plural care-of addresses. The information can be indicated using a flag or the like. When receiving, from the network, an RA message with the BID Allocation information set therein, the MN 10 recognizes that location information with the BID added thereto by the proxy node 31 on the network 30 side is registered at the home agent 32, and further that it can know the BID used by the proxy node 31 if requesting the BID upon generation of SA.

Therefore, when the IF22 performs handover to connect to the network 20, the MN 10 sets the BID added to location information to be registered by itself to the same value as the BID added by the proxy node 31, and the binding cache already registered is overwritten with a new address, so that the MN 10 performs IKEv2 to acquire the BID. Sine the BID Allocation information is information indicating whether a BID is added to the binding cache registered at the home agent 32, it can be configured as minimum necessary information such as a flag or the like. Thereby, when the IF22 of the MN 10 does not connect to networks other than the network 30 of operator B, since it is enough to know only whether a BID is added or not without the need to know the actual BID used by the proxy node 31, the BID Allocation information is effective.

When the M flag in the RA message is set, the RA processing section 109 instructs the DHCP request message generating section 103 to generate a DHCP request message. the IsPMIP information and the BID Allocation information included in the RA message may be included in a DHCP response message generated by the DHCP message processing section 110. Particularly, when the MN 10 itself generates an address automatically, since it does not use DHCP, the network side can use the RA message as notification means for connecting network information. On the other hand, when the MN 10 uses DHCP to receive the allocation of an address, the network side can use the DHCP response message as notification means for information. As means for indicating the IsPMIP information and the BID Allocation information, they may be indicated as options, rather than flags, addable to the RA message or the DHCP response message.

The access authentication processing section 108 receives a notification from the network connection detecting section 107 that it has connected to the access network, transmits, to the network, an access authentication request for starting authentication processing for the network, and receives the authentication result from the network. If the authentication result is to permit the MN 10 to connect, the RS transmission processing section 106, the DHCP request message generating section 103, and the IKE request message generating section 105 are notified of completion of authentication. For access authentication, a method such as IEEE802.1x or IEEE802.11i is employed, and as an authentication method, EAP-MD5, EAP-TLS, EAP-TTLS, EAP-PEAP, or the like is employed. Although the access authentication request message generated by the access authentication section 108 has no particular new information, it is a message to act as a trigger for the authentication request message transmitted by the PMA 31, and further to trigger BID allocation by the AAA server after that. Therefore, the MN 10 and the PMA 31 can consider the access authentication request message as a message for requesting BID allocation. Information for requesting BID allocation may be explicitly included in the access authentication request message.

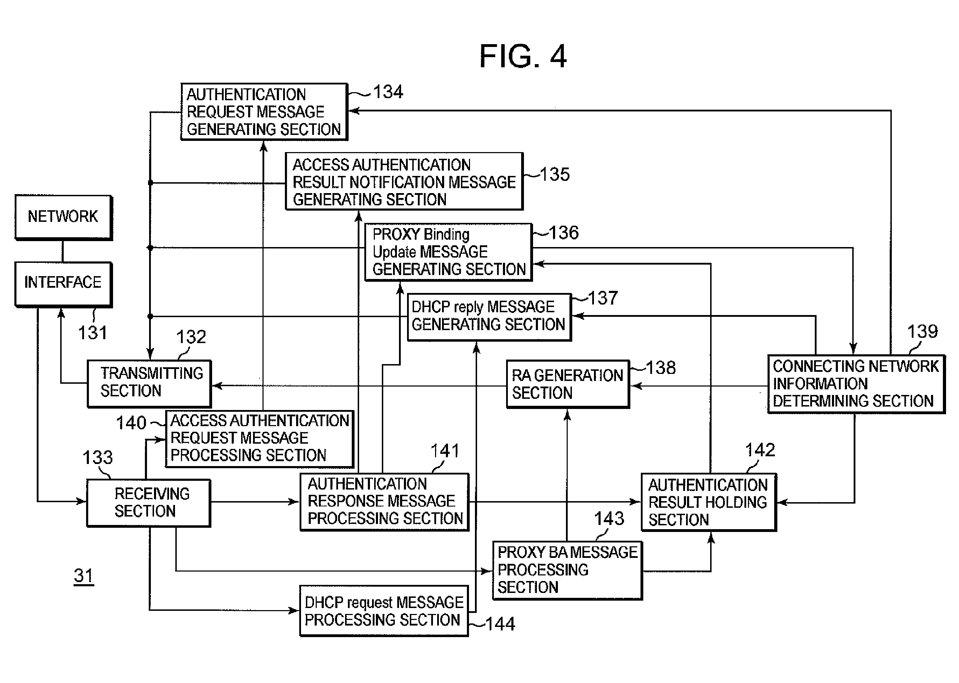

FIG. 4 is a diagram showing the structure of the proxy node (PMA) 31 according to the first embodiment of the present invention. The proxy node 31 has an interface 131 as a communication interface with a network, a transmitting section 132, a receiving section 133, an authentication request message generating section 134, an access authentication result notification message generating section 135, a proxy Binding Update (BU) message generating section 136, a DHCP reply message generating section 137, an RA generation section 138, a connecting network information determining section 139, an access authentication request message processing section 140, an authentication response message processing section 141, an authentication result holding section 142, a proxy BA message processing section 143, and a DHCP request message processing section 144.

In FIG. 4, the access authentication request message processing section 140 processes the access authentication request message from the MN 10, and instructs the authentication request message generating section 134 to generate and transmit an authentication request message. Information (such as a flag) explicitly indicating requests for BID allocation and acquisition/notification of a BID may be added to the authentication request message. The authentication response message processing section 141 processes an authentication response message received from the AAA server 50 to acquire the authentication result and the BID allocated to the MN 10 included in the message and hold them in the authentication result holding section 142. It also instructs the access authentication result notification message generating section 135 to generate an access authentication result notification message for notifying the MN 10 of the authentication result acquired from the AAA server 50. Further, it notifies the proxy BU message generating section 136 of completion of authentication.

The authentication result holding section 142 holds the BID allocated to the MN 10 together with the MN authentication result. The BID allocated to the MN 10 may be held in a BUL (Binding Update List) for storing management information on the MN 10, and the BUL may function as the authentication result holding section 142. In that case, the BUL receives an instruction from the proxy BA message processing section 143 to hold registered location information as information indicating the registered location information. In the case of acquisition of the BID allocated by the proxy BA message, the BID is also held. The proxy BU message generating section 136 receives a notification of completion of authentication from the authentication response message processing section 141, acquires the BID allocated to the MN 10 from the authentication result holding section 142, and generates the proxy BU message for registering a care-of address with the BID added thereto. The proxy BU message generating section 136 may acquire the BID allocated to the MN 10 from the BUL. The proxy BU message may also be used as a message for requesting acquisition/notification of a BID. In this case, the proxy BU message generating section 136 transmits, to the HA 32, the proxy BU message with no BID added thereto to request notification of a BID. The HA 32 that has received this message acquires, from a BC, the BID added to the registered location information previously used by the MN 10, and transmits the BID by including it in the proxy BA message. Like the BU message 300 of FIG. 23, the proxy BU message in this case includes an option 304 for notification of a BID and whose field portion to include a BID is empty (zero value). This option 304 may function as information for requesting acquisition of a BID, or information indicative of a request for acquisition of a BID may be added into a mobility header 301 or the option 304 for notification of a BID, or both may be combined. In addition, a flag indicative of a request for a BID may be included in a CoA option 303.
Further, the HA 32 replaces specified location information by new location information, acquires, from the BC (Binding Cache), the BID added to the location information as a target to be replaced, and transmits the BID by including it in the proxy BA message. When the BID is not added to the location information as the target to be replaced, or when there is no location information as the target to be replaced, new BID is generated and transmitted by including it in the proxy BA message. As a technique for acquisition/generation of a BID, the HA 32 may request acquisition/generation of a BID from the AAA server or the information server that holds information on the MN 10.

The proxy BA message processing section 143 processes the proxy BA message as a response to the proxy BU message transmitted by the proxy BU message generating section 136 to acquire the result of whether the notified location information has been registered. If the location information has been registered, it instructs the RA generation section 138 to transmit an RA message including the home prefix of the MN 10. If the proxy BU message is used as a message for requesting acquisition/notification of a BID, the proxy BA message includes the BID allocated from the network 30 together with the result indicative of completion of location information registration, so that the authentication result holding section 142 is instructed to hold the location information registered in the HA 32 together with the allocated BID.
The RA generation section 138 checks with the connecting network information determining section 139 as to whether the IsPMIP information and the BID Allocation information to be included in the RA message should be set. If a determination result that they should be set is returned, it sets the IsPMIP information and BID Allocation information in the RA message including the home prefix, and instructs the transmitting section 132 to transmit it to the network through the interface 131. When receiving a BID notification request with the RS message from the MN 10, the RA generation section 138 generates an RA message including the BID used for registration of location information on the MN 10 and transmits it to the MN 10. Even when receiving the RS message from the MN 10, the RA generation section 138 may generate the RA message including the BID used for registration of location information on the MN 10 and transmit it to the MN 10. In this case, both the prefix of the MN 10 and the BID are included in the RA message. The BID in this case may be the BID acquired by the PMA 31 from the HA 32 or the AAA server 50, or the BID generated by the PMA 31 itself and used for transmission of the proxy BU message.
When the BID is included in the RS message the PMA 31 has received from the MN 10, since the PMA 31 recognizes that the BID notified by the MN 10 is the BID the MN 10 wants the PMA 31 to use for registration of location information, the RA generation section 138 not only instructs the authentication result holding section 142 to hold the BID, but also generates an RA message including information indicating that the BID is correctly held and transmits it to the MN 10. In this case, if the MN 10 connected to the network 20 before performing handover to the network 30, the BID notified by the MN 10 is the BID that was used there. On the other hand, if the MN 10 did not connected to any network before performing handover to the network 30, or if the MN 10 did not use any BID, the BID is the BID newly generated by the MN 10.

The IsPMIP information and the BID Allocation information included in the RA message may be included in the DHCP response message generated by the DHCP reply message generating section 137. Particularly, when the MN 10 itself generates an address automatically, since it does not use DHCP, the network side can use the RA message as notification means for connecting network information. On the other hand, when the MN 10 uses DHCP to receive the allocation of an address, the network side can use the DHCP response message as notification means for information. As means for indicating the IsPMIP information and the BID Allocation information, they may be indicated as options, rather than flags, addable to the RA message or the DHCP response message. When the PMA 31 notifies the MN 10 of the BID, the BID may be included in the DHCP response message.

The connecting network information determining section 139 refers to the authentication result of the MN 10 held in the authentication result holding section 142, and if the access authentication result of the MN 10 is OK and use of Mobile IPv6 (home agent 32) is OK, it determines that the IsPMIP information should be set. The meaning of that the access authentication result is OK is that the MN 10 can use the network 30 with the network-based mobility control protocol. The meaning of that use of Mobile IPv6 is OK is that the MN 10 itself can register location information at the home agent 32.

Therefore, when use of Mobile IPv6 by the MN 10 is not OK, since it means that the MN 10 has no right to use the home agent 32, the network 30 needs only be indicated as just an access network without setting the IsPMIP information. On the other hand, if the MN 10 can use Mobile IPv6, since the proxy node 31 registers location information on the network 30 on behalf of the M N 10, the M N 10 needs to know whether the network-based mobility control protocol is provided for the network 30 to recognize that there is no need for itself to register location information.

The MN 10 also recognizes from the IsPMIP information that the address acquired on the network 30 is its own home address. If there is no IsPMIP information, since the MN 10 recognizes the connecting network as a normal access network, it also recognizes the acquired address as a care-of address. Then, in order to obtain its own mobility effect, the MN 10 tries to acquire the address of the home agent 32 or a home agent existing on another network and to register the acquired address as a care-of address. To prevent such behavior, the network side uses the IsPMIP information to notify the MN 10 that the network-based protocol is provided for the network 30.

When registration of plural care-of addresses for the MN 10 is permitted, the connecting network information determining section 139 determines that the BID Allocation information should be set. The meaning of that the registration of plural care-of addresses is permitted is that the MN 10 can register, at the home agent, location information on another interface. Therefore, when registration of plural care-of addresses are not permitted, since the MN 10 has no right to register, at the home agent 32, location information on another interface, the proxy node 31 does not need to notify the MN 10 whether location information is registered with the BID added thereto.

On the other hand, when registration of plural care-of addresses is permitted, since the MN 10 registers location information related to the IF11 with the BID added thereto, the MN 10 needs to know in advance whether the BID is added to the location information transmitted by the proxy node 31, i.e., whether registration of plural care-of addresses is permitted. If registration of plural care-of addresses is not permitted, since a BID is not added to the location information transmitted by the proxy node 31, the MN 10 cannot additionally register, at the home agent 32, location information with the BID added thereto and related to the IF11. Therefore, the network side uses the BID Allocation information to notify the MN 10 whether registration of plural care-of addresses is permitted, whether the home agent 32 supports registration of plural care-of addresses, and whether the proxy node 31 has registered the location information with the BID added thereto.

When use of Mobile IPv6 is OK, it may be determined that registration of plural care-of addresses is also OK, or when the access authentication result is OK, it may also be determined that use of Mobile IPv6 and registration of plural care-of addresses are both OK.

The DHCP request message processing section 144 performs processing related to the DHCP request message received from the MN 10, and instructs the DHCP reply message generating section 137 to generate a DHCP response message including the home address of the MN 10. The proxy node may be a DHCP server or a DHCP relay agent. The address to be allocated to the MN 10 may be acquired from the DHCP server provided by the network 30 or a management server for MN information.

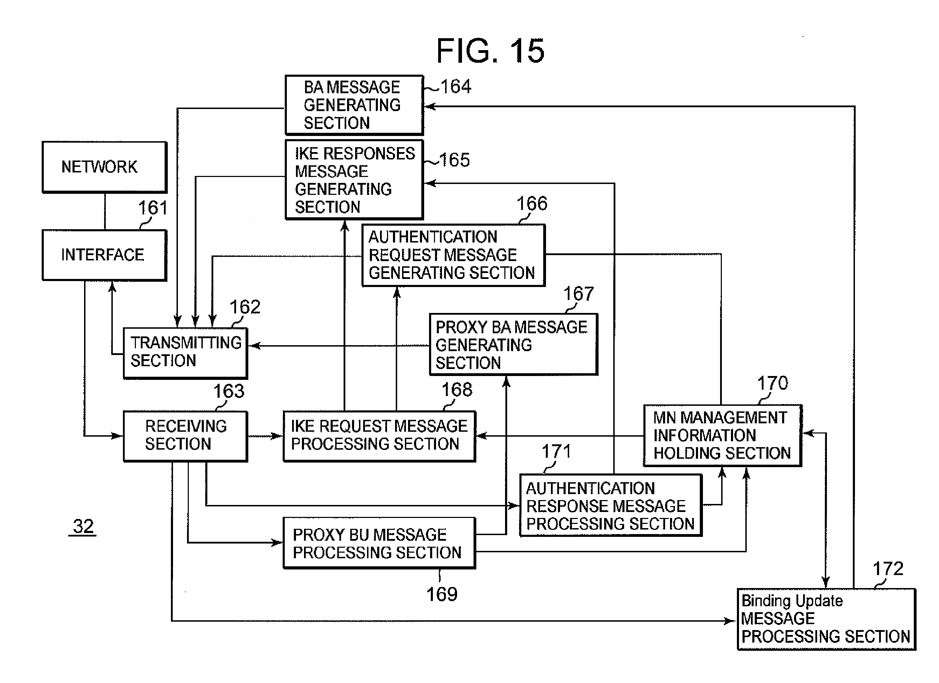

FIG. 15 is a block diagram showing the structure of the HA 32 according to the first embodiment of the present invention. The HA 32 has an interface 161, a transmitting section 162, a receiving section 163, a BA message generating section 164, an IKE responses message generating section 165, an authentication request message generating section 166, a proxy BA (Binding Acknowledgement) message generating section 167, an IKE request message processing section 168, a proxy BU (Binding Update) message processing section 169, an MN management information holding section 170, an authentication response message processing section 171 and a BU (Binding Update) message processing section172.

The following describes main components provided in the HA 32. The IKE request message processing section 168 performs processing related to an IKE request message received from the MN 10, and instructs the authentication request message generating section 166 to generate an authentication request message for requesting authentication of the MN 10 and allocation/acquisition/notification of a BID. When receiving the IKE request message from the MN 10 and knowing that the authentication of the MN 10 by the AAA server 50 is unnecessary, the IKE request message processing section 168 acquires the BID allocated to the MN 10 from the MN management information holding section 170 without instructing the authentication request message generating section 166 to generate the authentication request message, and instructs the IKE response message generating section 165 to generate an IKE response message including the BID. Even when the authentication of the MN 10 is necessary, the IKE request message processing section 168 may acquire the BID allocated to the MN 10 from the MN management information holding section 170, rather than acquiring the BID from the AAA server 50.

The authentication request message generating section 166 generates the authentication request message for requesting the authentication of the MN 10 to the AAA server 50. The message includes the ID or home address of the MN 10, etc. for specifying the MN. Information (such as a flag) explicitly indicating requests for BID allocation and acquisition/notification of a BID may be added to the authentication request message. The authentication request message generating section 166 may acquire the BID allocated to the MN 10 from the information (Binding Cache) on the MN 10 held in the MN management information holding section 170 and add it to the authentication request message. Further, information (such as a flag) explicitly indicating a request for the BID allocated to the MN 10 may be included in the message.

The MN management information holding section 170 holds, as information on the MN 10, location information on the MN 10 passed from the proxy BU message processing section 169, the authentication result of the MN 10 passed from the authentication response message processing section 171, etc. The BID added by the PMA 31 is associated with the location information on the MN 10, and the BID is passed when a request is received to acquire the BID allocated to the MN 10 from the IKE request message processing section 168 and the BU message processing section 172.

The authentication response message processing section 171 performs processing related to an authentication response message received from the AAA server 50, passes, to the MN management information holding section 170, the authentication result of the MN 10 and the allocated BID included in the message, and instructs the MN management information holding section 170 to hold them. It also instructs the IKE response message generating section 165 to generate an IKE response message including the acquired BID. The IKE response message generating section 165 receives instructions from the IKE request message processing section 168 and the authentication response message processing section 171 to generate the IKE response message including the BID allocated to the MN 10 and passed thereto, and passes the IKE request message and instructs the transmitting section 162 to transmit it.

The proxy BU message processing section 169 performs processing related to a proxy BU message received from the PMA 31, passes the location information on the MN 10 included in the message to the MN management information holding section 170, and instructs the MN management information holding section 170 to hold the location information. The proxy BU message processing section 169 also instructs the proxy BA message generating section 167 to generate a proxy BA message including information indicating the result of registration of location information on the MN 10. Further, the proxy BU message processing section 169 instructs the authentication request message generating section 166 to generate an authentication request message for requesting the authentication of the PMA 31.

In the case where the PMA 31 uses the proxy BU message, rather than the authentication request message, as a message for requesting BID allocation, when confirming that no BID is included in the received proxy BU message or confirming information indicating a request for a BID, the proxy BU message processing section 169 instructs authentication request message generating section 166 to generate an authentication request message for requesting the authentication of the PMA 31 and allocation/acquisition/notification of a BID. When receiving the proxy BU message from the PMA 31, if the authentication of the PMA 31 by the AAA server 50 is unnecessary, the proxy BU message processing section 169 acquires the BID added to location information as a target to be replaced or generate, by itself, the BID to be allocated to the MN 10 without instructing the authentication request message generating section 166 to generate the authentication request message, and instructs the MN management information holding section 170 to hold the BID together with location information on the MN 10 to be registered. The proxy BU message processing section 169 also instructs the proxy BA message generating section 167 to generate a proxy BA message including the generated BID together with information indicating the registration result of the location information on the MN 10. Even if the authentication of the MN 10 is necessary, the proxy BU message processing section 169 may acquire the BID added to the location information as the target to be replaced or generate, by itself, the BID to be allocated to the MN 10, rather than acquiring the BID from the AAA server 50. The location information on the MN 10 includes ID of the MN 10, the home address, the home prefix, etc. as information for specifying the MN 10, and the address of the PMA 31 as a connection destination of the MN 10. This location information also includes the BID associated with this location information by the MN 10.

The proxy BA message generating section 167 receives an instruction from the proxy BU message processing section 169 to generate a proxy BA message including information indicating the registration result of location information on the MN 10, passes the proxy BA message to the transmitting section 162 and instructs the transmitting section 162 to transmit it. When the PMA 31 uses the proxy BU message as a message for requesting BID allocation, the proxy BA message generating section 167 generates the proxy BA message including the BID generated by the proxy BU message processing section 169, passes the proxy BA message to the transmitting section 162, and instructs the transmitting section 162 to transmit it.

The BU message processing section 172 performs processing related to a BU message from the MN 10, passes the location information on the MN 10 to the MN management information holding section 170, and instructs the MN management information holding section 170 to hold it. In the case where the MN 10 uses the BU message, rather than the IKE request message, as a message for requesting the acquisition of the allocated BID, when confirming that no BID is included in the received proxy BU message or confirming information indicating a request for a BID, the BU message processing section 172 acquires the BID added to the location information as the target to be replaced from the MN management information holding section 170, or generates, by itself, the BID to be allocated to the MN 10, rather than acquiring the BID, and instructs the BA message generating section 164 to generate a BA message including the BID. The BU message in this case includes an option for notification of a BID and whose field portion to include a BID is empty (zero value). This option may function as information indicating a request for acquisition of a BID, or information (such as a flag) indicative of a request for acquisition of a BID may be added into a mobility header 301, or into the option for notification of a BID and an alternative CoA option, or both may be combined.

The BA message generating section 164 receives an instruction from the BU message processing section 172 to generate a BA message including information indicating the registration result (completion of registration) of location information on the MN 10, passes the BA message to the transmitting section 162 and instructs the transmitting section 162 to transmit it. When the MN 10 uses the BU message, rather than the IKE request message, as a message for requesting the acquisition of a BID allocated, the BA message generating section 164 generates a BA message including the BID acquired by the BU message processing section 172 from the MN management information holding section 170, passes the BA message to the to the transmitting section 162 and instructs the transmitting section 162 to transmit it.

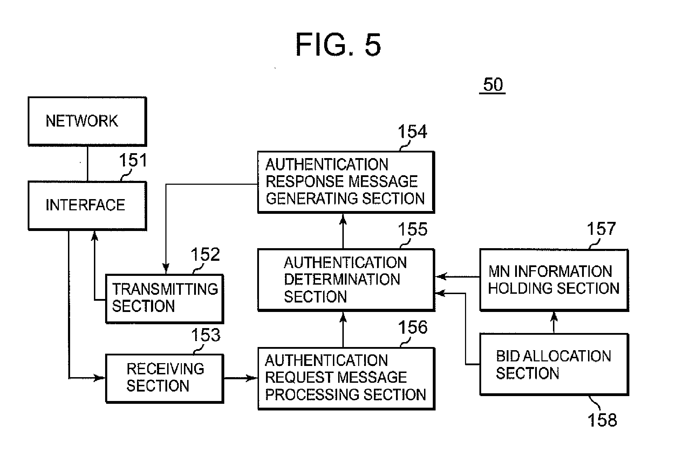

FIG. 5 is a diagram showing the structure of the AAA server 50 according to the first embodiment of the present invention. The AAA server 50 functions as a management server for allocating the BID used by the PMA to register location information on the MN 10. The AAA server 50 has an interface 151 with the network, a transmitting section 152, a receiving section 153, an authentication response message generating section 154, an authentication determination section 155, an authentication request message processing section 156, an MN information holding section 157, and a BID allocation section 158. The authentication request message processing section 156 processes a request for access authentication of the MN 10 received from the proxy node 31, and the authentication request message related to a request for authentication of the proxy node 31 received from the HA 32, and instructs the authentication determination section 155 to authenticate the MN 10 as the source of the request for authentication.

The authentication determination section 155 receives an instruction from the authentication request message processing section 156 to refer to the MN information holding section 157 so as to authenticate the MN 10. The authentication is performed in terms of whether the MN 10 is permitted to use the network 30, whether use of Mobile IPv6 (home agent) is permitted, whether registration of plural care-of addresses is permitted, etc. When the MN 10 is permitted to register plural care-of addresses, the BID to be allocated to the MN 10 is acquired from the BID allocation section 158 to allocate the BID used for registration of location information on the IF22, and the authentication response message generating section 154 is instructed to generate the authentication response message including the BID together with the authentication result.

When the BID is included in the authentication request message from the proxy node 31 received by the authentication request message processing section 156, the MN information holding section 157 is instructed to hold it as the BID allocated to the MN 10, and the authentication response message generating section 154 is instructed to generate a authentication response message indicating BID availability and completion of registration together with the authentication result. Similarly, when a BID is included in the authentication request message from the HA 32, the MN information holding section 157 is instructed to hold it as the BID allocated to the MN 10, and the authentication response message generating section 154 is instructed to generate the authentication response message indicating BID availability together with the authentication result and completion of registration.

The BID allocation section 158 receives an instruction from the authentication determination section 155 to generate/acquire the BID to be allocated to the MN 10 as the target for authentication. In that case, the MN information holding section 157 is referred to, and when there is the BID already allocated, the BID is returned to the authentication determination section 155, while when there is no BID allocated, new generated BID is returned and the MN information holding section 157 is instructed to hold it. The authentication response message generating section 154 receives an instruction from the authentication determination section 155 to generate an authentication response message including the allocated BID together with the notified authentication result of the MN 10, and instructs the transmitting section 152 to transmit it. When the BID generated by the proxy node 31 is included in the authentication request message received, the authentication response message generating section 154 generates the authentication response message indicating availability and completion of registration and instructs the transmitting section 152 to transmit it.
As described in the first embodiment of the present invention, even upon moving from a network with a network-based mobility control protocol to a network without any network-based mobility control protocol, the MN 10 can use the BID added to location information registered by the proxy node to register new location information in order to update the location information registered by the proxy node before moving.

### <Second Embodiment>

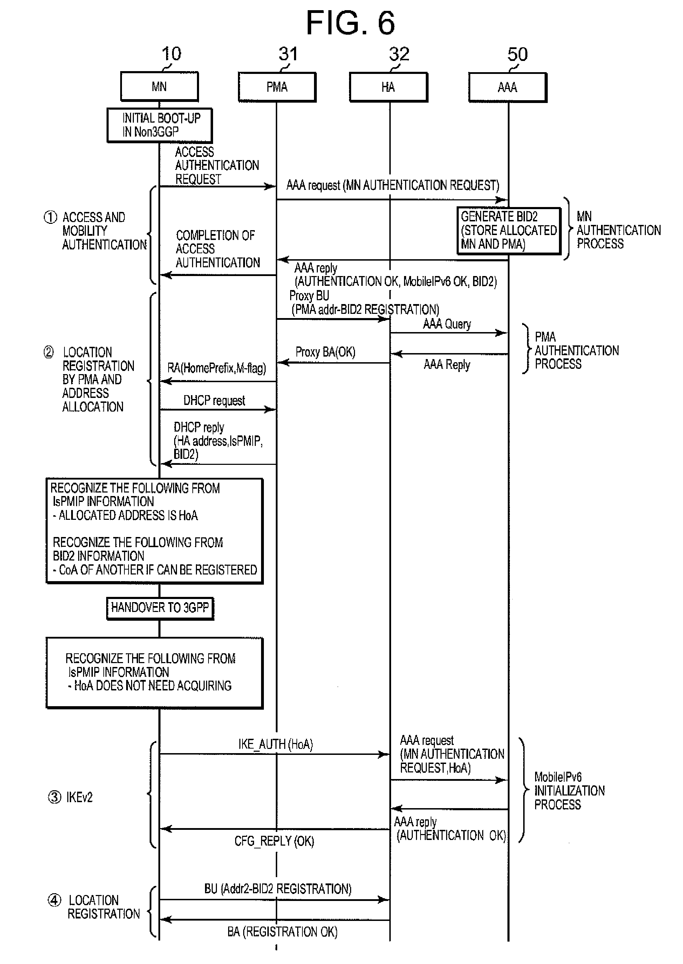

A network configuration of a second embodiment is the same as that of the first embodiment. The structure of each entity is almost the same as that of the first embodiment. The difference from the first embodiment is that information included in an RA/DHCP response as shown in FIG. 6 is not the BID Allocation information but the BID itself. Therefore, the MN 10 does not request a BID in IKEv2 after handover.

A communication sequence shown in FIG. 6 will be described.
(1) Access and mobility authentication
   Since it is the same as that in the first embodiment, the description thereof will be omitted.
(2) Location registration by PMA and address allocation
   Since "Proxy BU," "AAA Query," "AAA reply," "Proxy BA," "RA," and "DHCP request" are the same as those in the first embodiment, the description thereof will be omitted.
   - When receiving the DHCP request from the MN 10, the PMA 31 transmits a DHCP reply to the MN 10 to notify the MN 10 of the address of the HA 31 (HA address), the IsPMIP information, and the BID2 (BIDAllocOK in the first embodiment).

When receiving the DHCP reply from the PMA 31, the MN 10 recognizes the following from the IsPMIP information:
- The allocated address is HoA.
   The MN 10 also recognizes the following from the BID2:

- CoA of another IF can be registered.

### <Handover to network 20>

When performing handover to the network 20, the MN 10 recognizes the following from the IsPMIP information.
- HoA does not need acquiring.

(3) IKEv2
   - When performing handover to the network 20, the MN 10 transmits IKE_AUTH to the HA 32 to notify the HA 32 of HoA (the BID is requested in the first embodiment).
   - The HA 32 receives IKE_AUTH from the MN 10 and transmits an AAA request to the AAA server 50, transmits an MN authentication request and HoA (the BID in the first embodiment). When the AAA server 50 receives this AAA request, and transmits a AAA reply to the HA 32 and notifies authentication OK, Mobile IPv6 initialization process is performed (the BID is notified in the first embodiment). The AAA server 50 receives this AAA request, transmits the AAA reply to the HA 32, and notifies the HA 32 of authentication OK, thereby performing the Mobile IPv6 initialization process (the BID is notified in the first embodiment).
   - When receiving the AAA reply from the AAA server 50, the HA 32 transmits CFG_REPLY to the MN 10 to notify the MN 10 of OK (the BID2 in the first embodiment).
(4) Location registration
   Since it is the same as that of the first embodiment, the description thereof will be omitted.

### <Third Embodiment>

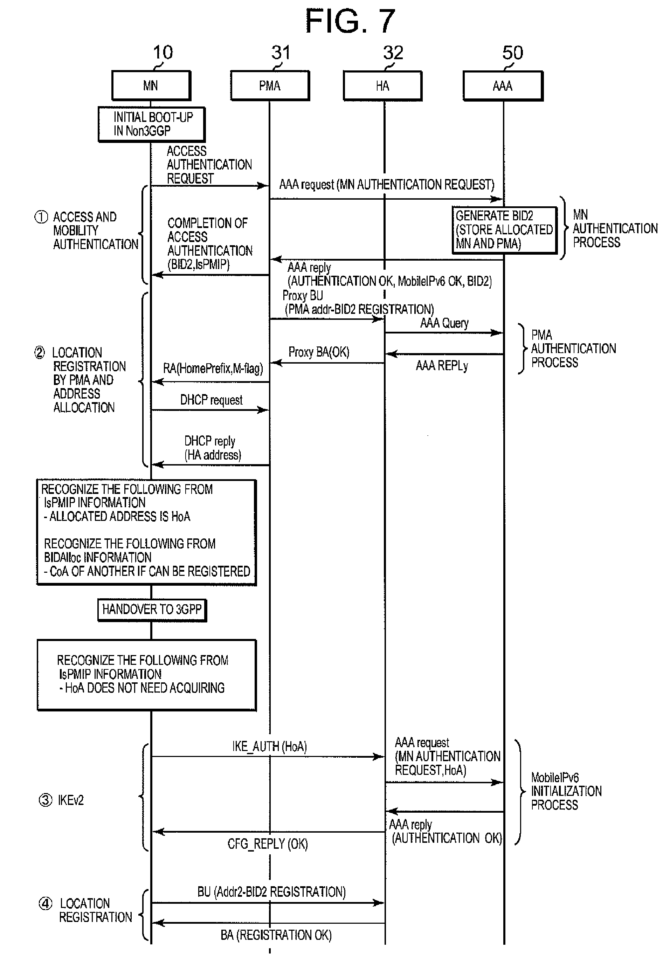

The network configuration of a third embodiment is the same as that of the first embodiment. The difference between the third embodiment and the first embodiment is that the IsPMIP information and the BID are included in an access authentication complete notification message as shown in FIG. 7. Therefore, the MN 10 does not request a BID in IKEv2 after handover in the same manner as in the second embodiment.

A communication sequence shown in FIG. 7 will be described.
(1) Access and mobility authentication
   Since "access authentication request," "AAA request," and "AAA reply" are the same as those in the first embodiment, so that when receiving the AAA request (MN authentication request) from the PMA 31, the AAA server 50 performs the MN authentication process to generate the BID2, stores the MN 10 to which the BID2 is allocated and the PMA 31, and notifies the PMA 31 of authentication OK, Mobile IPv6 OK, and the BID2 with a AAA reply.
   - In the third embodiment, when receiving the AAA reply from the AAA server 50, the PMA 31 transmits an access authentication complete message to the MN 10 to notify the MN 10 of the BID2 and the IsPMIP information.

(2) Location registration by PMA and address allocation
   "Proxy BU," "AAA Query," "AAA reply," "Proxy BA," "RA," and "DHCP request" are the same as those in the first embodiment.
   - In the third embodiment, when receiving a DHCP request from the MN 10, the PMA 31 transmits a DHCP reply to the MN 10 to notify the MN 10 of the address of the HA 32 (HA address). Here, the IsPMIP information and BID allocation OK (BIDAllocOK) are not notified. The subsequent processing is the same as that of the second embodiment, the description thereof will be omitted.

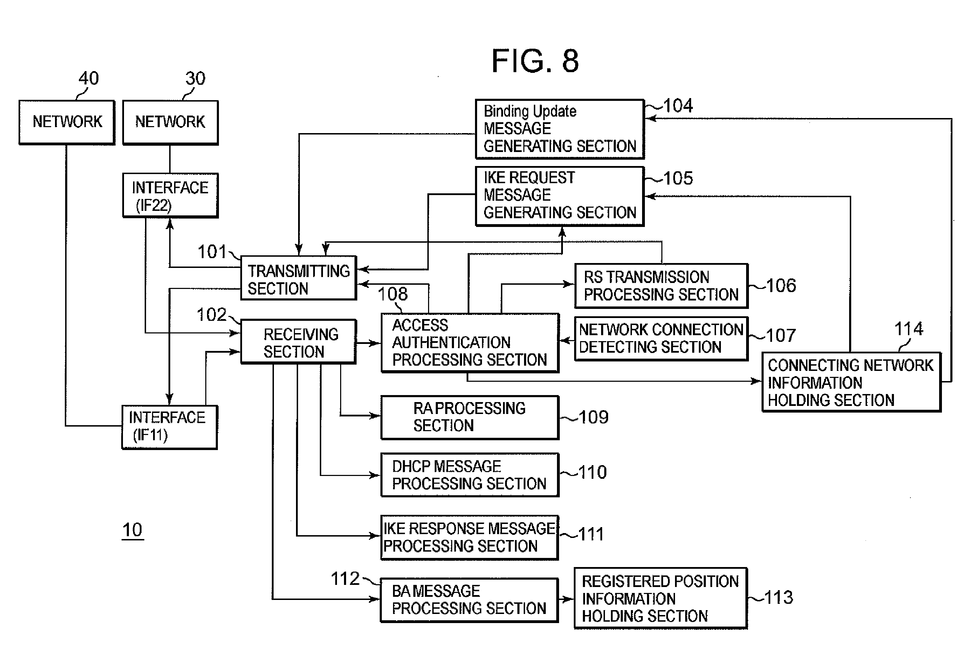

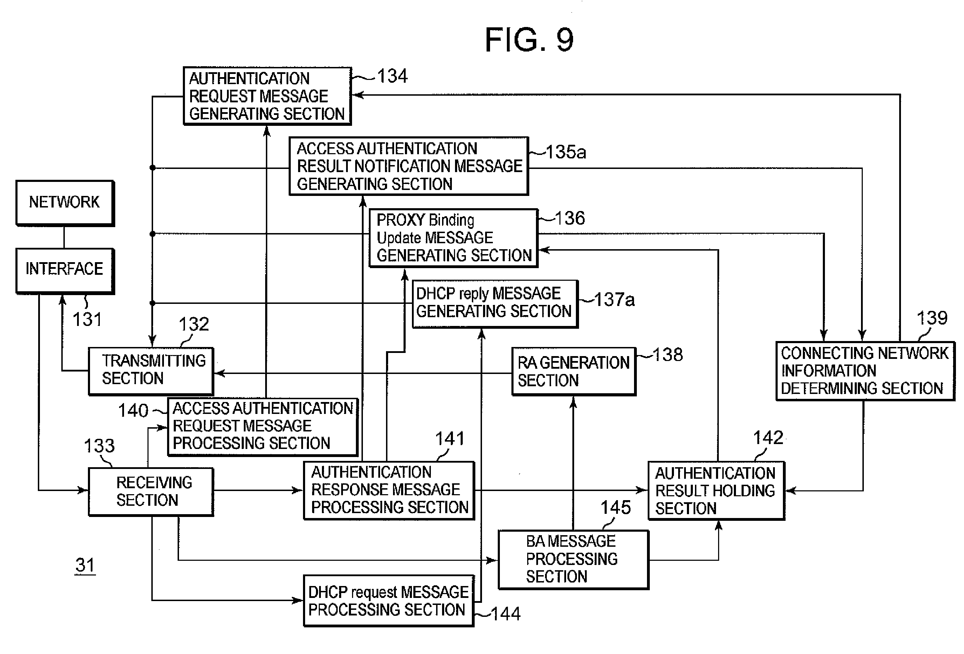

FIG. 8 shows the structure of the MN 10 according to the third embodiment, indicating the same structure except that the DHCP request message generating section 103 shown in FIG. 3 is omitted. FIG. 9 shows the structure of a proxy node according to the third embodiment, indicating differences from FIG. 4 in processing by an authentication result notification message generating section 135a and a DHCP reply message generating section 137a. In the first to third embodiments of the present invention, the AAA server 50 generates a BID and notifies it to the proxy node 31 with the authentication response message. As another method, the proxy node 31 itself may generate a BID and notify the AAA server of use of the BID. In that case, the authentication request message generating section 134 generates the BID used for registration of location information on the MN 10, generates an authentication request message including the BID, and transmits it to the AAA server. Further, in this case, the BID may be notified upon location registration by the proxy node 31 and in the PMA authentication process, rather than in the MN authentication process. In that case, the proxy BU message generating section 136 generates a BID when generating a proxy BU message for registration of location information on the MN 10, and transmits, to the HA 32, the BID in such a manner to include it in the message.

The HA 32 that has received this proxy BU message transmits the BID included in the message to the AAA server 50 in such a manner to include it in a AAA Query. Then, when the AAA reply from the AAA server 50 indicates authentication OK, the BID is added and the location information on the MN 10 is held. Here, the notification of the BID from the HA 32 to the AAA server 50 may be omitted. In that case, the HA 32 holds, in the binding cache, the BID included in the proxy BU message from the PMA 31, and when receiving a BID notification request from the MN 10, the HA 32 notifies the BID. The MN 10 requests the BID in IKE performed with the HA 32 to acquire the BID used by the PMA 31.

As still another method, the HA 32 may generate a BID and notify the AAA server of use of the BID. In that case, the HA 32 that has received the proxy BU message from the PMA 31 generates the BID to be added to location information on the MN 10, and transmits the AAA Query including the BID to the AAA server 50. Then, when the AAA reply from the AAA server 50 indicates authentication OK, the BID is added to and held in an entry of the MN 10 to be registered. Further, the BID is transmitted to the PMA 31 in such a manner to include it in the proxy BA message. The PMA 31 that has received the proxy BA message including the BID transmits the BID in such a manner to add it to the proxy BU message upon transmission of the proxy BU message of the MN 10.

Thus, the AAA server 50 and the HA 32 can function as nodes that generate and notify the BID or nodes that receive notification of the BID, so that they can be deemed to be integrated management nodes having all these functions as entities within a network.

In the first to third embodiments of the present invention, the case where the network to connect is changed by handover from the network 30 to the network 20 so that the MN 10 moves from a state using the network-based protocol to a state not using the network-based protocol is described, but as another case, any of the techniques of the present invention are also applicable to a case where when the IF22 of the MN 10 is connecting to the network 30, the state is changed at the discretion of the MN itself or the network side from the state using the network-based protocol to the state not using the network-based protocol.

Even in such a state that the MN 10 is using the network-based protocol without handover (before handover to the network 20, or when the network-based protocol is provided for the network 40 but the IF11 does not perform handover), the BID can be acquired using any of the techniques of the present invention whenever the BID is necessary to register flow control information at a home agent or a correspondent partner.
Further, though not shown, the BID acquired using any of the techniques of the present invention can be used for not only registration of location information but also registration of flow control information.

### <Fourth Embodiment>

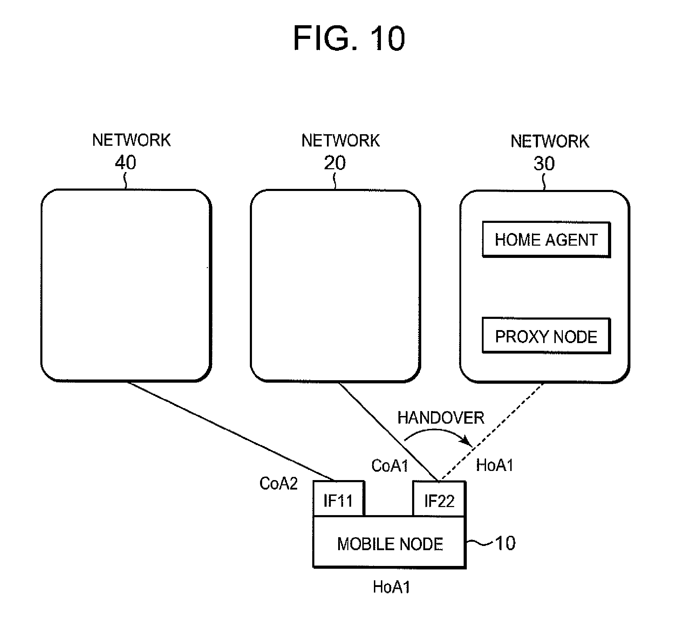

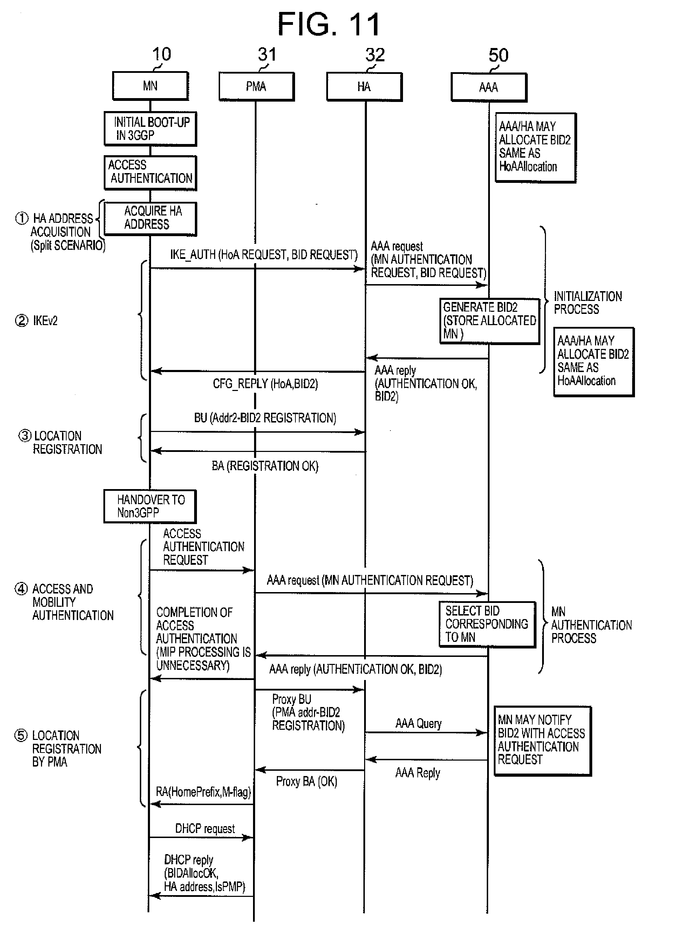

FIG. 10 is a diagram showing a network configuration according to a fourth embodiment of the present invention. The difference from the first embodiment is that handover is performed from the network 20 to the network 30. The structure of and processing by each entity are the same as those in the first embodiment, except that processing performed before moving in the first embodiment as shown in FIG. 11 is performed after moving in the fourth embodiment, and processing performed after moving in the first embodiment is performed before moving in the fourth embodiment.

In FIG. 10, an operator providing each network is not shown in FIG. 10, but each network may be provided by a different operator in the same manner as in the first embodiment. Like in FIG. 12 in the first embodiment, the network 40 and the network 30 may be provided by the same operator A, and in that case, the home agent 32 is a common home agent shared between both the network 20 and the network 30. The Network 40 provided by operator A is, as an example, a cellular network, and the network 30 with a network-based protocol is, as an example, a network such as wireless LAN (802.11 a/b/g/n), WiMAX, or Bluetooth (registered trademark). Similarly, the network 20 of operator B without any network-based protocol is, as an example, a network such as wireless LAN (802.11 a/b/9/n), WiMAX, or Bluetooth (registered trademark).

Like in FIG. 13 in the first embodiment, all the networks 20, 30, and 40 may be provided by the same operator A. In that case, the home agent 32 is a common home agent shared among all the networks 20, 30, and 40. The network 40 is, as an example, a cellular network, and the network 30 with the network-based protocol is, as an example, a network such as wireless LAN (802.11 a/b/9/n), WiMAX, or Bluetooth (registered trademark). Similarly, the network 20 without any network-based protocol is, as an example, a network such as wireless LAN (802.11 a/b/9/n), WiMAX, or Bluetooth (registered trademark). In the above network configuration, the network 20 is assumed to be a network without any network-based protocol, but there may also be a case where the network-based protocol is provided but the MN 10 is not using the protocol. In other words, the MN in the fourth embodiment of the present invention uses the network-based protocol on the network 30, and does not use the protocol on the network 20.

In the fourth embodiment of the present invention, a case where the network to connect is changed by handover from the network 20 to the network 30 so that the MN 10 moves from a state not using any network-based protocol to a state using a network-based protocol is described, but as another case, the technique of the present invention is also applicable to a case where when the IF22 of the MN 10 is connecting to the network 20, the state is changed at the discretion of the MN itself or the network side from the state not using the network-based protocol to the state using the network-based protocol.

A communication sequence shown in FIG. 11 will be described.
- Upon initial boot-up on the network 20, the MN 10 performs access authentication.
   (1) Acquisition of HA address (split scenario)
      - The MN 10 acquires the address of the HA 32 using DNS or the like.
   (2) IKEv2
      - The MN 10 transmits IKE_AUTH to the HA 32 to request HoA and a BID.
      - The HA 32 receives IKE_AUTH from the MN 10, and transmits a AAA request to the AAA server 50 to request MN authentication and the BID. The AAA server 50 receives this AAA request, generates the BID2, stores the MN 10 to which the BID2 is allocated, and transmits a AAA reply to the HA 32 to notify the authentication OK and the BID2, thereby performing the initialization processing. At this time, the BID2 may be allocated by either the AAA server 50 or the HA 32.
      - When receiving the AAA reply from the AAA server 50, the HA 32 transmits CFG_REPLY to the MN 10 to notify HoA and the BID2.

(3) Location registration
   This is the same as the location registration in the first embodiment, namely:
   - When receiving CFG_REPLY from the HA 32, the MN 10 transmits BU to the HA 32 to register Add r2 and the BID2.
   - When receiving BU from the MN 10, the HA 32 transmits BAto the MN 10 to notify location registration OK.

When the MN 10 performs handover from the network 20 to the network 30, the following processing is performed:
(4) Access and mobility authentication
   - When performing handover to the network 30, the MN 10 transmits an access authentication request to the PMA 31.
   - The PMA 31 receives the access authentication request from the MN 10, and transmits the MN authentication request to the AAA server 50 in the form of a AAA request. The AAA server 50 receives the AAA request (MN authentication request) from the PMA 31, selects a BID for the MN, and notifies the PMA 31 of authentication OK and the BID2 in the form of a AAA reply, thereby performing the MN authentication process.
   - When receiving the AAA reply from the AAA server 50, the PMA 31 notifies the MN 10 of the IsPMIP information and the BID Allocation information in the form of an access authentication complete message to indicate that MIP processing is unnecessary.

The IsPMIP information may be included in PA received after access authentication or s DHCP reply. Although the authentication request message transmitted by the MN 10 to the PMA 31 have no particular new information, it acts as a trigger for the authentication request message transmitted by the PMA 31, and further as a trigger for a message to acquire a BID from the AAA server after that. Therefore, the MN 10 and the PMA 31 can consider the authentication request message as a message for requesting BID acquisition. Information for requesting BID acquisition may be explicitly included in the access authentication request message.

(5) Location registration by PMA
   This is the same as (2) Location registration by PMA in the first embodiment.
   Address registration is also the same as that in the first embodiment.
   In the fourth embodiment of the present invention, the AAA server 50 generates a BID and notifies it to the proxy node 31 in the form of an authentication response message, but as another method, the HA 32 may generate a BID and notify the AAA server of use of the BID. In that case, the HA 32 that has received an IKE request message from the MN 10 generates a BID to be added when the MN 10 registers location information, transmits a AAA Query including the BID to the AAA server 50. Then, when a AAA reply from the AAA server 50 indicates authentication OK, the HA 32 transmits, to the MN 10, an IKE response message in such as manner to include the BID therein. The MN 10 that has received the IKE response message including the BID transmits the BID in such a manner to add it to a proxy BU message upon transmission of the proxy BU message.

As still another method, the MN 10 itself may generate a BID and notify the HA 32 and the AAA server 50 of use of the BID. In that case, the IKE request message generating section 105 generates a BID used for registration of its own location information, generates an IKE request message including the BID, and transmits it to the HA 32. The HA 32 that has received this BU message transmits the BID included in the message to the AAA server 50 in such a manner to include it in a AAA Query. when a AAA reply from the AAA server 50 indicates authentication OK, the BID is added and the location information on the MN 10 is held. Here, the notification of the BID from the HA 32 to the AAA server 50 may be omitted. In that case, the HA 32 holds, in the binding cache, the BID included in the proxy BU message from the PMA 31, and when receiving the BID notification request from the MN 10, it notifies the BID. The PMA 31 requests the BID in IKE or proxy BU performed on the PMA 31 to acquire the BID used by the MN 10.

Further, as a method of acquiring the BID to be used for registration of location information on the MN 10 after the MN 10 performs handover to the network 30, the BID may be requested with a proxy BU message including location information on the MN 10. In this case, the HA 32 that has received the proxy BU message from the PMA 31 transmits, to the AAA server 50, the AAA Query to request the BID allocated to the MN 10, and holds the BID included in a AAA reply in such a manner to add it to an entry of the MN 10 to be registered. Further, the HA 32 transmits, to the PMA 31, a proxy BA message in such a manner to include the BID therein. When transmitting the proxy BU message after that, the PMA 31 adds the BID to transmit the proxy BU message to the HA 32. The HA 32 that has received the proxy BU message from the PMA 31 may acquire the BID allocated to the MN 10 from the BCE held by itself, rather than querying the AAA server 50, to notify the BID with the proxy BA message.

Thus, the AAA server 50 and the HA 32 can function as nodes that generate and notify a BID or as nodes that receive notification of the BID, and further as nodes that select and notify the BID, so that they can be deemed to be integrated management nodes having all these functions as entities within a network.
As described in the fourth embodiment of the present invention, even upon moving from a network without any network-based mobility control protocol to a network with a network-based mobility control protocol, since the proxy node updates location information registered by the MN 10 before moving, the MN 10 can use the BID added to the location information registered by the MN 10 to register new location information.

### <Fifth Embodiment>

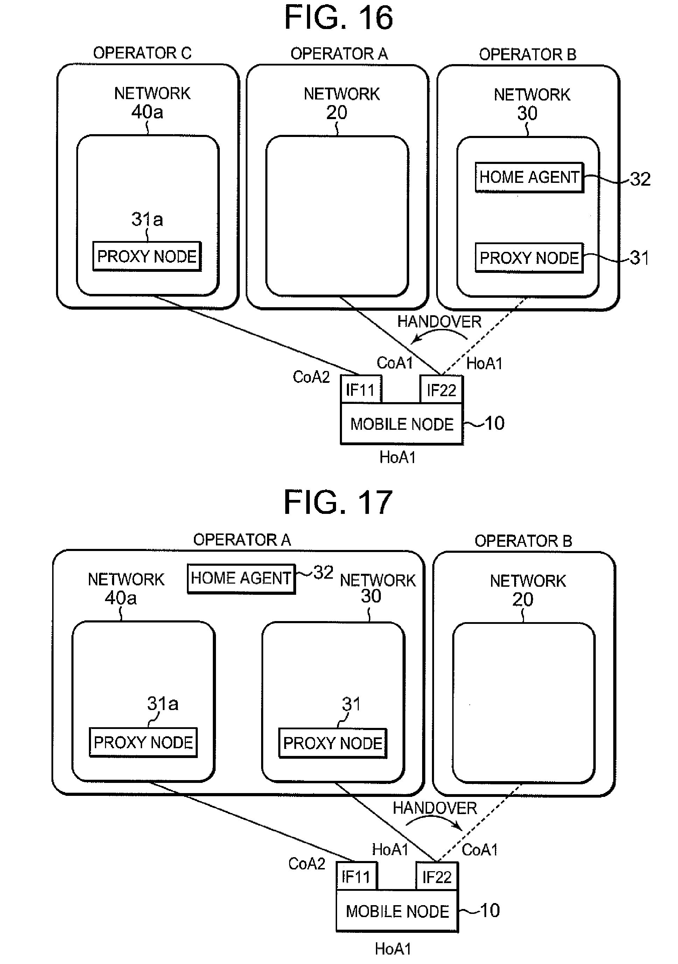

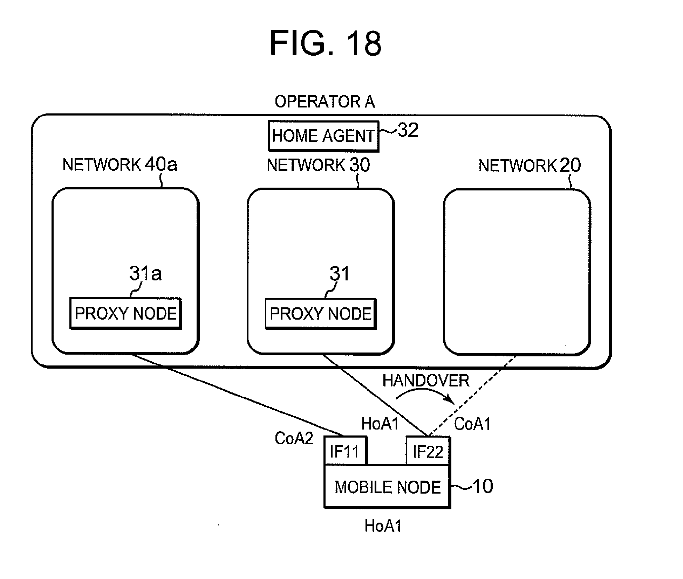

FIG. 16, FIG. 17, and FIG. 18 are block diagrams showing a network configuration of a fifth embodiment, indicating alternative embodiments of FIG. 1, FIG. 12, and FIG. 13, respectively. In FIG. 1, FIG. 12, and FIG. 13, the network 40 with which the IF11 of the MN 10 is communicating does not provide any network-based mobility control protocol (network-based protocol), while in FIG. 16, FIG. 17, and FIG. 18, a network 40a provides a network-based protocol (PMIP) and a proxy node 31a exists. The other parts of configuration in FIG. 16, FIG. 17, and FIG. 18 are the same of those in FIG. 1, FIG. 12, and FIG. 13.

In such a network configuration, suppose that the MN 10 moves from such a state that the IF11 and the IF22 of the MN 10 before moving are communicating respectively with the networks 40a and 30 with the network-based protocol so that only the IF22 performs handover to the network 20 without any network-based protocol and requests a BID to the home agent 32. In this case, there is a problem that the home agent 32 cannot know which of the IF11 and IF22 has performed handover so that the BID of the IF12 that has actually performed handover cannot be transferred to the MN 10. Therefore, in the fifth embodiment, the home agent 32 stores respective BIDs in association with MAC addresses as information for specifying the respective interfaces IF11 and IF12 to determine which BID is requested.

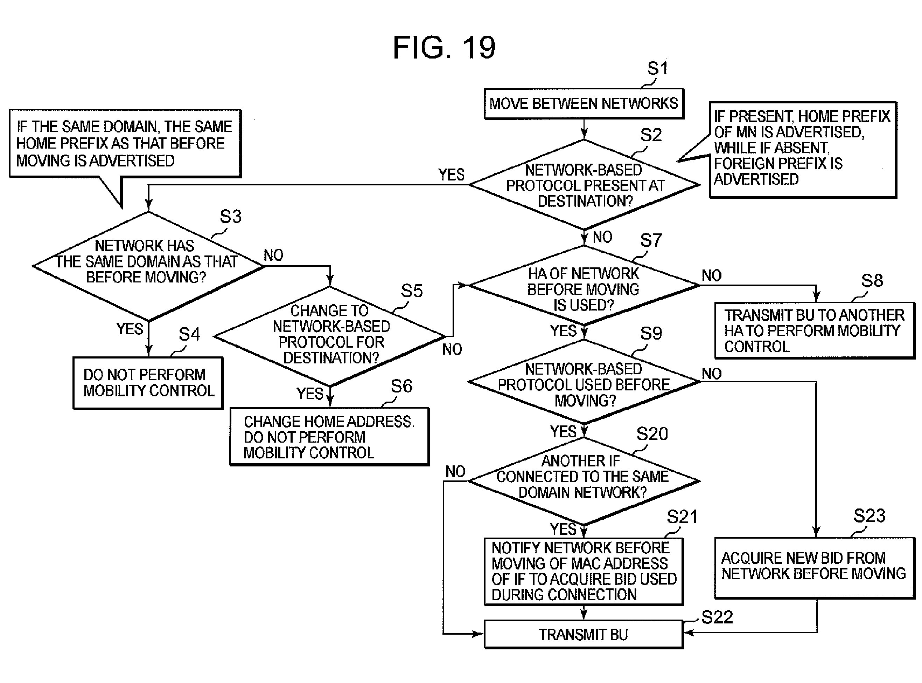

The structure of the MN 10 in the fifth embodiment is the same as that of FIG. 3 in the first embodiment, except for determination processing by the IKE request message generating section 105 as shown in FIG. 19. Steps S1 to S9 of FIG. 19 are the same as those of FIG. 14 in the first embodiment. In step S9, it is determined whether the network-based protocol was used in the network before moving. If used, the other IF (IF 11 that does not perform handover) also connects, in step S20, to the same domain network as the IF12 that has performed handover to determine whether the network-based protocol is used. If connecting to the same domain network and the network-based protocol is used, a MAC address of the IF22 that has performed handover is acquired from the connecting network information holding section 114. This acquired MAC address of the IF22 is used to acquire the BID used during connection from the network before moving (step S21). Then, BU including this acquired BID is transmitted (step S22). If the same HA 32 is not used, BU is transmitted (step S22). In step S9, if no network-based protocol was used on the network before moving, new BID is acquired from the network before moving (step S23), and BU including this BID is transmitted (step S22). In step S23, if mobility control was performed by itself on the network before moving, the BID used on the network before moving continues to be used. When the BU message is used as a message for requesting acquisition/notification of a BID, the Binding Update message generating section 104 performs processing shown in FIG. 19 to determine whether the BU message including the MAC address should be transmitted.

The structure of proxy nodes 31 and 31 a in the fifth embodiment is the same as that of FIG. 4 in the first embodiment, except for the following block processing. First, the authentication result holding section 142 holds the BID and the MAC address allocated to the MN 10 together with information on the authentication result of the MN 10. BUL may function as the authentication result holding section 142, and in that case, the authentication result holding section 142 also holds location information registered by the MN 10 at the HA or a CN. When generating the authentication request message as a message for requesting acquisition/notification of a BID, the authentication request message generating section 134 acquires the MAC address of the MN 10 from the connecting network information determining section 139 to generate an authentication request message in which the acquired MAC address is set. The authentication response message processing section 141 instructs the authentication result holding section 142 to hold the MAC address of an IF corresponding to the acquired BID of the MN 10. It also instructs the proxy BU message generating section 136 to generate the proxy BU message for registration of location information of the MN 10. The proxy BU message generating section 136 receives an instruction from the authentication response message processing section 141, acquires the BID and MAC address allocated to the MN 10 from the authentication result holding section 142, and generates a proxy BU message including them.

The structure of the AAA server 50 in the fifth embodiment is the same as that of FIG. 5 in the first embodiment, except for the following block processing. The BID allocation section 158 generates a BID to be allocated to the MAC address of the MN 10. The BID allocation section 158 refers to the MN information holding section 157, and if there is the BID allocated to the already notified MAC address of the MN 10, it returns the BID to the authentication determination section 155. Unlike in the first embodiment, since the MAC address is included in the authentication request message, the authentication request message processing section 156 instructs the authentication determination section 155 to perform authentication of the MN 10 while passing the MAC address included in the message. The authentication determination section 155 passes, to the BID allocation section 158, the MAC address of the MN 10 passed from the authentication request message processing section 156, and instructs the BID allocation section 158 to allocate the BID to this MAC address. The MN information holding section 157 also holds the MAC address of the MN 10 together.

The structure of the HA 32 in the fifth embodiment is the same as that of FIG. 15 in the first embodiment, except for the following block processing. The IKE request message processing section 168 performs processing related to an IKE request message received from the MN 10, acquires the MAC address of the MN 10 as one piece of information on the MN included in the message, passes the MAC address to the authentication request message generating section 166, and instructs it to generate the authentication request message for requesting authentication of the MN 10. In this case, this authentication request message is configured to request the BID allocated to the MN 10 and corresponding to the MAC address. When receiving the IKE request message from the MN 10, if the authentication of the MN 10 by the AAA server 50 is unnecessary, the IKE request message processing section 168 acquires the BID corresponding to the MAC address of the MN 10 from the MN management information holding section 170 without instructing the authentication request message generating section 166 to generate the authentication request message, and instructs the IKE response message generating section 165 to generate an IKE response message including the BID. Even when the authentication of the MN 10 is necessary, the IKE request message processing section 168 may acquire the BID allocated to the MN 10 from the MN management information holding section 170, rather than acquiring the BID from the AAA server 50. When the BU message is used as a message for requesting acquisition/notification of a BID, the BA message generating section 112 performs the same processing as the IKE request message processing section 168.

The IKE response message generating section 165 receives instructions from the IKE request message processing section 168 and the authentication response message processing section 171 to generate the IKE response message including the passed BID allocated to the MN 10, and pass it to and instruct the transmitting section 162 to transmit it. The MAC address of the MN 10 may also be included. The MN management information holding section 170 holds, as information on the MN 10, location information on the MN 10 passed from the proxy BU message processing section 169, the authentication result of the MN 10 passed from the authentication response message processing section 171, etc. The BID and the MAC address added by the proxy node 31, 31 a is associated with the location information on the MN 10. When receiving requests for acquisition of the BID allocated to the MN 10 from the IKE request message processing section 168 and the BU message processing section 172, the BID is passed.

### <Specific Example>

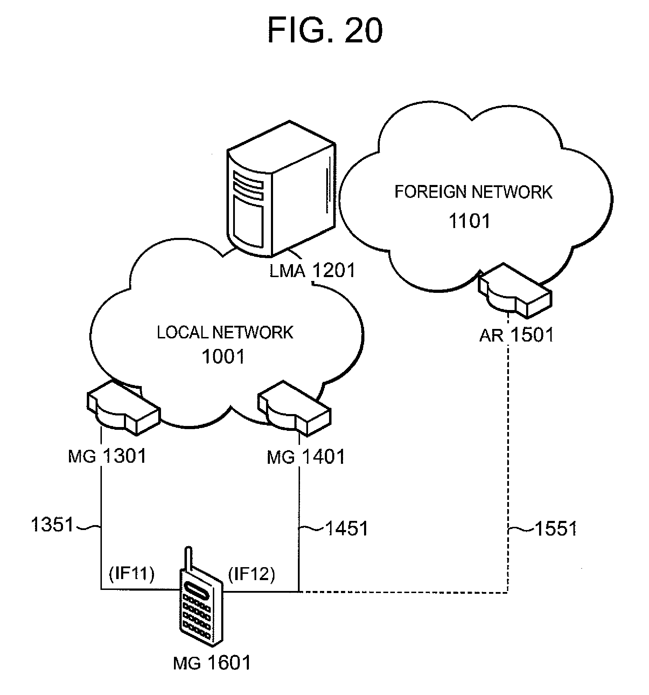

FIG. 20 shows a specific example of the fifth embodiment. As indicated by the solid lines, respectively, IF11 and IF12 of an MN 1601 before moving are connected to a local network 1001 with a network-based protocol via MAG (Mobile Access Gateway) 1301 (and link 1351) and MAG 1401 (and link 1451) as proxy nodes of the MN 1601. Then, both the MAG 1301 and the MAG 1401 register the current location of the MN 1601 with an LMA (Local Mobility Anchor) 1201. The LMA 1201 serves as a home agent of the MN 1601 when the mobile IP is used. A description will be made below using the LMA.

Next, as indicated by the broken line, the IF11 of the MN 1601 remains intact and only the IF12 moves out of the local network 1001. When the IF12 connects to an AR (access router) 1501 (and link 1551) on a foreign network 1101, the MN 1601 starts mobile IP operation and tries to register, with the LMA 1201, a care-of address (CoA) acquired from the AR 1501. At this time, for BID allocation, the MN 1601 transmits a BID request message to a mobility management node to request the BID used for the IF12 before moving. Here, the mobility management node is the LMA 1201, the AAA server 50, a packet data gateway (PDG), or any other network node knowing the BID of the MN 1601. Suppose here that the mobility management node is the LMA 1201. When receiving the BID request message from the MN 1601, the LMA 1201 becomes aware that there are two BID entries of the MN 1601, so that it does not know which BID to return in the first to fourth embodiments.

Therefore, in this specific example, the MAGs 1301 and 1401 embed link identifiers of the MN 1601 in a proxy BU to be transmitted to the LMA 1201. Further, the MN 1601 transmits a BID request message related to the IF12 that moved in such a manner to include a link identifier for the IF12 therein. From this link identifier, the LMA 1201 can easily determine for which proxy BU the BID requested by the MN 1601 is used, and notify the BID without querying the MAGs 1301 and 1401. This link identifier is, for example, a link-layer address of IF11, IF12 of the MN 1601, or the MAC address of the IF11, IF12 if the MN 1601 uses interfaces compliant with IEEE802 like WiFi or Ethernet (registered trademark).

Here, the MAGs 1301 and 1401 can acquire the link-layer addresses of the IF11 and IF12 of the MN 1601 in several ways. For example, the MAGs 1301 and 1401 can acquire the link-layer addresses by a lower-layer communication protocol such as IEEE802.11 or IEEE802.16 during communication with the MN 1601. The MAC address is described in a field of source address of a packet arriving from the MN 1601. As another method, the MN 1601 can access the MAC address during an association phase when the MN 1601 first connected to the MAG 1301, 1401 or during an authentication phase. As still another method, IP-level neighbor discovery can be performed to acquire the link-layer address. As still another method, a query may be put to a server having a network policy or performing authentication. The following description may be made using the MAC address instead of the link identifier.

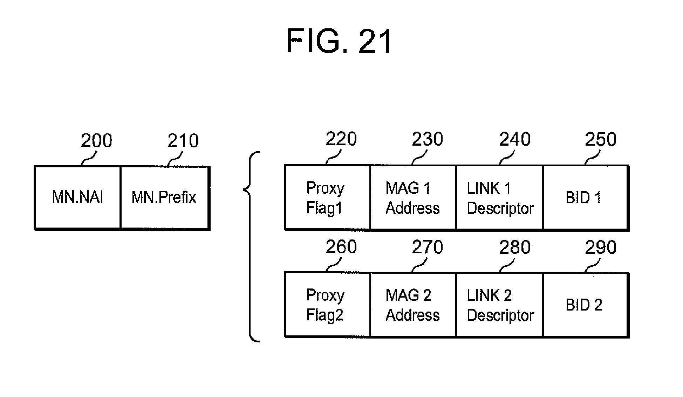

FIG. 21 shows a binding cache entry (BCE) of the MN 1601 held by the LMA 1201 when the IF11 and the IF12 of the MN 1601 are both connecting to the local network 1001. This BCE has MN.NAI 200 as an NAI (Network Access Identifier) of the MN 1601 and MN.Prefix 210 as a prefix allocated to the MN 1601. The BCE also has, as each entry for the MAG 1301, 1401, proxy flags 220 (Proxy Flag 1) and 260 (Proxy Flag 2) indicative of being entries registered by the proxy nodes, an address 230 (MAG1 Address) of the MAG 1301 and an address 270 (MAG2 Address) of the MAG 1401, both indicative of being proxy nodes, a link 1 descriptor (Link 1 Descriptor) 240 corresponding to the link 1351 to which the IF11 of the MN 1601 connects, a link 2 descriptor (Link 2 Descriptor) 280 corresponding to the link 1451 to which the IF12 connects, and the BID 250 (BID 1), the BID 290 (BID 2) allocated to the respective entries.

When the IF12 of the MN 1601 moves into the foreign network 1101 and starts the mobile IP, it first transmits a BID request message to the LMA 1201. This BID request message includes the MAC address of the IF12 that has moved into the foreign network 1101. When receiving this BID request message, the LMA 1201 performs matching with the MAC address in the message so that it can identify the requested BID 290 (BID 2) correctly and hence respond to the BID request message immediately.

As yet another method, the MAG 1301, 1401 may include the MAC address of its interface communicating with the MN 1601 in the proxy BU transmitted to the LMA 1201. In this case, when the IF12 of the MN 1601 moves into the foreign network 1101 and starts the mobile IP to transmit the BID request message to the LMA 1201, the MAC address of the IF of the MAG 1401 as the previous connection point is included in this BID request message. Therefore, when receiving this BID request message, the LMA 1201 performs matching with the MAC address in the message so that it can identify the requested BID 290 (BID 2) correctly and hence respond to the BID request message immediately.

As another example, the MN 1601 may use a unique identifier locally for each connection of the IF11 and the IF12. This has the advantage of being able to clearly identify each link of the IF11, IF12 supporting plural links simultaneously. However, in this case, the MN 1601 has to clearly notify the MAG 1301, 1401 as the connection ID used. This notification can be made by sending another message during the association phase. The MAG 1301, 1401 includes this connection identifier in the proxy BU for the LMA 1201 instead of the MAC address. The LMA 1201 includes this connection identifier in the BCE instead of the MAC address. Then, when the IF12 of the MN 1601 moves into the foreign network 1101 and transmits the BID request message to the LMA 1201, it includes the connection identifier associated with the IF12 in this BID request message. The LMA 1201 performs matching with the connection ID related to the IF12 and included in this BID request message so that it can return the BID 290 (BID 2) correctly.

As yet another example, the MAG 1301 may feed back directly to the MN 1601. In this case, the MN 1601 first notifies the MAG 1301 that it wants to know the BID allocated by the network. This notification can be made by sending a flag or another message during the association phase. The MN 1601 may selectively query the MAG 1301 any time during communication with the MAG 1301. When receiving this notification, the MAG 1301 notifies the MN 1601 of the BID obtained from the LMA 1201.

The MAG 1301 may also notify the BID to the MN 1601 in other various ways. One is a method of adding the BID to a router advertisement (RA) message to the MN 1601. This method is useful especially in a case where a (PMIP) domain for a network-based mobility control protocol adopts allocation of one prefix to one MN. This is because the MN 1601 receives a unicast RA invisible to the other nodes. If the RA is broadcast, confusion occurs as to which MN the BID belongs to, but the unicast RA can prevent this. As another method, the BID from the MAG 1301 to the MN 1601 may be notified with a dedicated message, and this dedicated message may be transmitted by adding it to an existing packet destined for the MN 1601.

As still another example, the AR 1501 may solve this problem, though the AR 1501 is not part of the PMIP local network 1001. In this case, when the IF12 of the MN 1601 moves into the foreign network 1101 and the MN 1601 starts the mobile IP to transmit the BID request message to the LMA 1201, the AR 1501 receives a packet including this BID request message, detects the BID request message, and adds, as an option, the link identifier of the MN 1601 to the BID request message. The link identifier as this option may be transmitted by adding it to the BID request message destined for the LMA 1201 or transmitted with another packet. The LMA 1201 interprets this option including the link identifier, and processes the BID request message in the same way as mentioned above.

On the other hand, when the MN 1601 moves from the AR 1501 in the foreign network 1101 to the MAG 1401 in the local network 1001, since the MN 1601 can receive a PMIP service, the MAG 1401 decides to start the PMIP service. Then, the MAG 1401 transmits, to the LMA 1201, the BID request message including the link identifier of the MN 1601.

### <Sixth Embodiment>

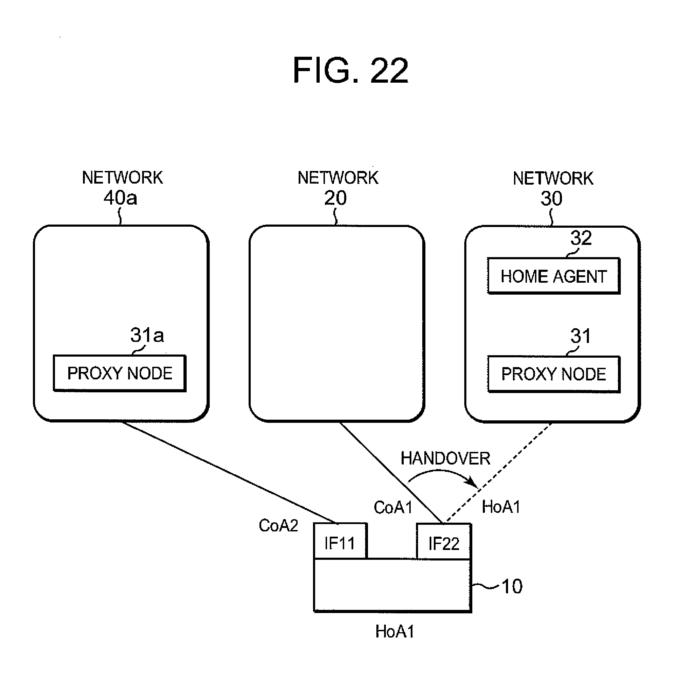

FIG. 22 is a diagram showing a network configuration according to a sixth embodiment of the present invention. Like in FIG. 10 in the fourth embodiment, handover is performed from the network 20 to the network 30 with the network-based protocol. The difference from FIG. 10 is that the network 40a provides the network-based protocol and the proxy node 31 a exists. Suppose here that the MN 10 moves from such a state that the IF11 and the IF12 of the MN 10 before moving are communicating respectively with the networks 40a with the network-based protocol and the network 20 without any network-based protocol so that only the IF12 performs handover to the network 30 with the network-based protocol. In this case, use of the MAC addresses of the IF11 and the IF12 also enables notification of the BID of the IF12 to the proxy node 31 in the network 30.

### <Seventh Embodiment>

In a seventh embodiment of the present invention, an MN 10 performs handover from a network 30 with a network-based mobility control protocol to a network 20 without any network-based mobility control protocol. Since the network configuration of the seventh embodiment is the same as that of the first embodiment described with reference to FIG. 1, FIG. 12, and FIG. 13, the description thereof will be omitted.

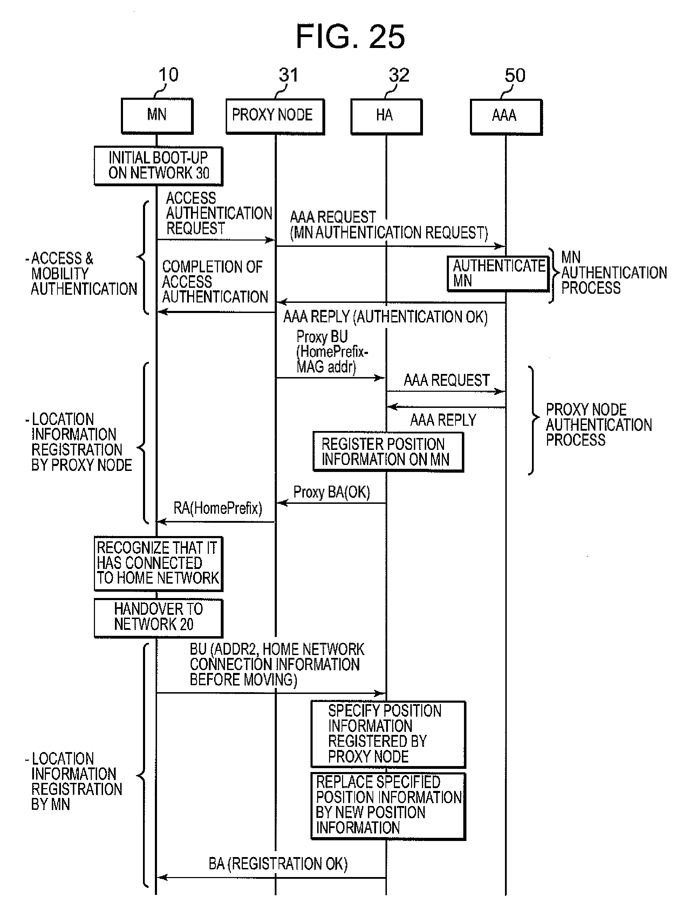

FIG. 25 shows a communication sequence as sequence in the seventh embodiment of the present invention when the MN 10 performs handover to the network 20 after the MN 10 is initially booted on the network 30 and location information on the MN 10 is registered by a proxy node 31 (MAG: Mobile Access Gateway, PMA (Proxy Mobile Agent), hereinafter referred to as proxy node) at a home agent 32 (HA or LMA: Local Mobility Anchor, hereinafter referred to as HA).

(1) Access and mobility authentication
   - When initially booted on the network 30, the MN 10 transmits an access authentication request message ("message" is omitted in the following description and the communication sequence diagram) to the proxy node 31.
   - When receiving the access authentication request from the MN 10, the proxy node 31 transmits an MN authentication request with a AAA request to a AAA (Authentication, Authorization, Accounting) server 50.
   - When receiving the AAA request (MN authentication request) from the proxy node 31, the AAA server 50 performs an MN authentication process to notify the proxy node 31 of authentication OK of authentication OK with a AAA reply.
   - When receiving the AAA reply from the AAA server 50, the proxy node 31 notifies the MN 10 of completion of access authentication.

(2) Location information registration by proxy node
   - The proxy node 31 transmits a Proxy BU (Binding Update) to the HA 32 to register, as location information on the MN 10, information associated with an address (MAG addr) of the proxy node 31 in a home prefix of the MN 10.
   - After receiving this, the HA 32 transmits a AAA request to the AAA server 50, and when receiving the AAA request, the AAA server 50 transmits a AAA reply to the HA 32 to perform a proxy node authentication process. If the authentication of the proxy node 31 is unnecessary, transmission of the AAA request may be omitted.
   - When receiving the AAA reply from the AAA server 50, the HA 32 transmits a Proxy BA (Proxy Binding Acknowledgement) to the proxy node 31.
   - When receiving, form the HA 32, the Proxy BA indicating that the registration of the location information is OK, the proxy node 31 transmits an RA (Router Advertisement) to the MN 10 to notify the MN 10 of the home prefix of the MN 10.

- When receiving the RA from the proxy node 31, the MN 10 uses the prefix included in the message to generate an address and allocates the address to the IF.
   If the prefix included in the message is its own home prefix, the MN 10 recognizes that it is connecting to the home network. Further, when the home prefix is included in the RA, the MN 10 may recognize not only that it is connecting to the home network, but also that this state is realized by a network-based mobility control protocol. Further, as mentioned in the first embodiment of the present invention, when IsPMIP information is included in the RA, the MN 10 may recognize that the network-based mobility control protocol is provided.
   When an M flag is included in the RA, the MN 10 transmits a DHCP (Dynamic Host Configuration Protocol) request to the proxy node 31. In this case, when receiving the DHCP request from the MN 10, the proxy node 31 transmits a DHCP reply to the MN 10 to notify an address allocated to the MN 10. As mentioned in the first embodiment of the present invention, an address (HA address) of the HA 32 and IsPMIP information may be notified together with the address allocated to the MN 10.

(3) Location information registration by MN
   - When moving to the network 20, the MN 10 determines that the network 30 connected before moving was the home network, and transmits, to the HA 32, information (hereinafter, home network connection information before moving) indicating that it connected to the home network before moving together with the address (Addr2) acquired on the network 20 in such a manner to add them to a BU message.
   - When receiving the BU message from the MN 10, the HA 32 confirms that the home network connection information before moving is present in the message, and determines that the target to be replaced by new location information is location information registered by the proxy node. The HA 32 specifies location information registered by the proxy node from among the pieces of location information already registered, and replaces it by the new location information after moving. Then, the HA 32 transmits a BA message including the result of registration of the location information to the MN 10.

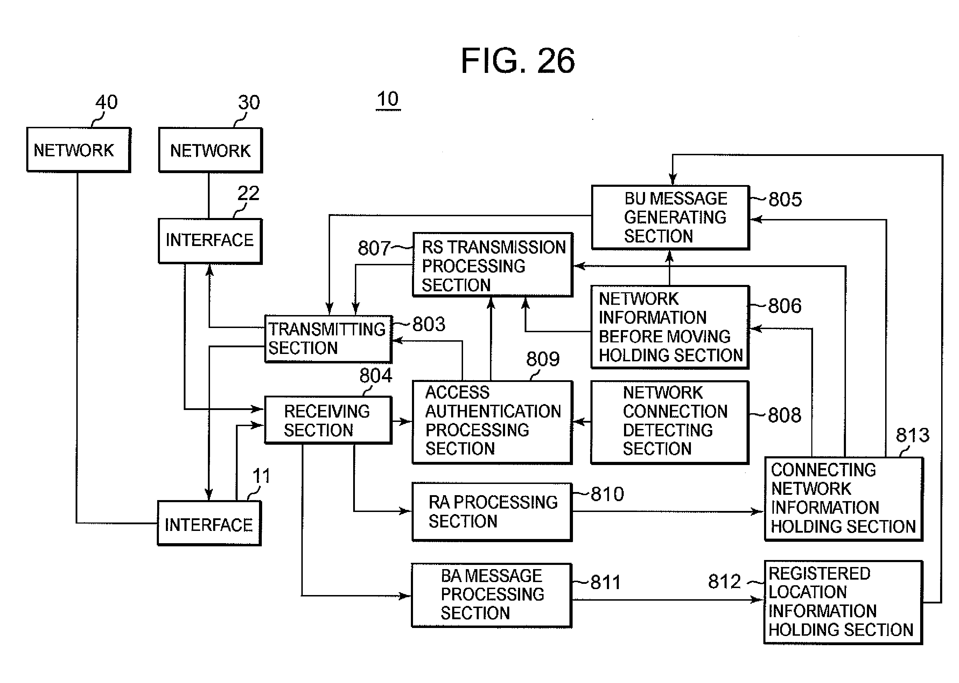

FIG. 26 is a block diagram showing the structure of the MN 10 the seventh embodiment and an eighth embodiment to be described later. The MN 10 has, in addition to the above-mentioned interfaces IF11 and IF22, a transmitting section 803, a receiving section 804, a Binding Update (BU) message generating section 805, a network information before moving holding section 806, an RS (Router Solicitation) transmission processing section 807, a network connection detecting section 808, an access authentication processing section 809, an RA (Router Advertisement) processing section 810, a BA(Binding Acknowledgement) message processing section 811, a registered location information holding section 812 and a connecting network information holding section 813.

The following describes main components provided in the MN 10. The presence of the interfaces IF11 and IF22 indicates that the MN 10 has two interfaces. The transmitting section 803 and the receiving section 804 have the function of transmitting/receiving packets through the interfaces IF11 and IF22, respectively. The BU message generating section 805 receives a notification from the connecting network information holding section 813 that the IF11 or IF22 has performed handover and the network to connect has been changed, and generates a BU message for updating location information before moving, registered at the HA 32, to location information after moving.

When the network after moving is an external network, the BU message generating section 805 checks the network information before moving holding section 806 to determines whether the network connected before moving was the home network. As a result, if the network before moving was the home network, the BU message generating section 805 adds, into a BU message to generate, information (called home network connection information before moving, which may be represented by a flag or the like) indicating that the network before moving was home network, or that the network before moving provided a network-based mobility control protocol. For example, after the IF22 performed handover from the network 30 to the network 20, when receiving a notification from the connecting network information holding section 813 that the network to which the IF 22 connects has been changed, and recognizing that it has connected to an external network, the BU message generating section 805 checks the network information before moving holding section 806 and recognizes that the network before moving was the home network. Then, the BU message generating section 805 generates the BU message including the home network connection information before moving together with the address acquired on the network after moving, and transmits it to the HA 32. The BID generated by the MN 10 may be added to the BU message including the home network connection information before moving and transmitted as the BID used for registration of location information on the IF22.

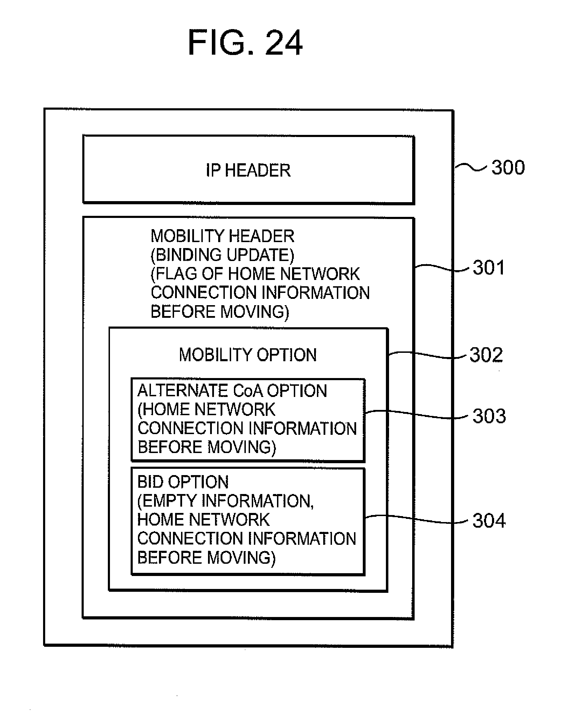

As shown in FIG. 24, the home network connection information before moving in the BU message transmitted by the MN 10 may be included in a mobility header 301 or an alternate CoA option 303 in the form of a flag or the like, or in an option 304 including the BID. A flag located in the same location as external network connection information before moving to be described later may be so used that, when the flag is set, it indicates the home network connection information before moving, while when the flag is not set, it indicates the external network connection information before moving, and vise visa.

In this case, the HA 32 that has received this BU message recognizes, from the home network connection information before moving in the message, that location information before moving of the MN 10 is the location information registered by the proxy node, so that the HA 32 can specify the location information registered by the proxy node 31 as the target to be replaced by new location information included in the BU message from the MN 10. The HA 32 replaces the specified location information by the new location information, and transmits a BA message as a response message to this BU message in such a manner to include therein information indicative of the success of the replacement as information indicative of the result of replacement of the location information.

Further, as mentioned in the first embodiment of the present invention, the BU message including the home network connection information before moving may be used to request a BID used for registration of location information on the IF22. In this case, the HA 32 that has received the BU message including the home network connection information before moving acquires, from a BC (Binding Cache), the BID added to the location information before moving of the MN 10 specified using the home network connection information before moving, and notifies the BID to the MN 10 by including it in the BA message. When no BID is added to the location information before moving of the MN 10, or when there is no location information as the target to be replaced, new BID is generated and transmitted by including it in the BA message. As a method of acquiring/generating a BID, the HA 32 may request acquisition/generation of the BID from the AAA server 50 or an information server holding information on the MN 10.

Further, as shown in FIG. 23, a BU message 300 in this case includes an option 304 for notification of a BID and whose field portion to include a BID is empty (zero value). This option 304 may be used as the home network connection information before moving and information indicative of a request for acquisition of a BID, or information indicative of a request for acquisition of a BID may be added into the mobility header 301 or the option 304 for notification of a BID, or both may be combined. In addition, a flag indicative of a request for a BID may be included in the alternate CoA option 303. When the BID generated by the MN 10 is added in the BU message from the MN 10, the HA 32 holds location information after moving together with the BID, and transmits, to the MN 10, the BID by including it in the BA message together with information indicative of the success of the replacement as information Indicative of the result of replacement of the location information. The MN that has received this BA message uses the BID included in the received BA message for subsequent registration of location information on the IF22. Instead of the BU message and the BA message, an IKE request message and an IKE response message may be used.

The network information before moving holding section 806 holds the information on the networks connected before moving of the IF11 and the IF22, which has been passed from the connecting network information holding section 813.

The RS transmission processing section 807 receives a notification of completion of access authentication from the access authentication processing section 809, generates an RS message for requesting the network 20, 30, or 40 currently connected to transmit an RA message, and instructs the transmitting section 803 to transmit the RS message. If the RA message can be received before the RS message is transmitted, the RS message does not need transmitting.

When receiving a notification from the connecting network information holding section 813 that the network to connect has been changed after the IF11 or IF22 performed handover, the RS transmission processing section 807 transmits the RS message to the proxy node that transmits the proxy BU message for updating the location information before moving registered at the HA 32 to location information after moving. At this time, if the network after moving is the home network, the RS transmission processing section 807 checks the information before moving holding section 806 to determine whether the network connected before moving was an external network, i.e., a network without any network-based mobility control protocol.

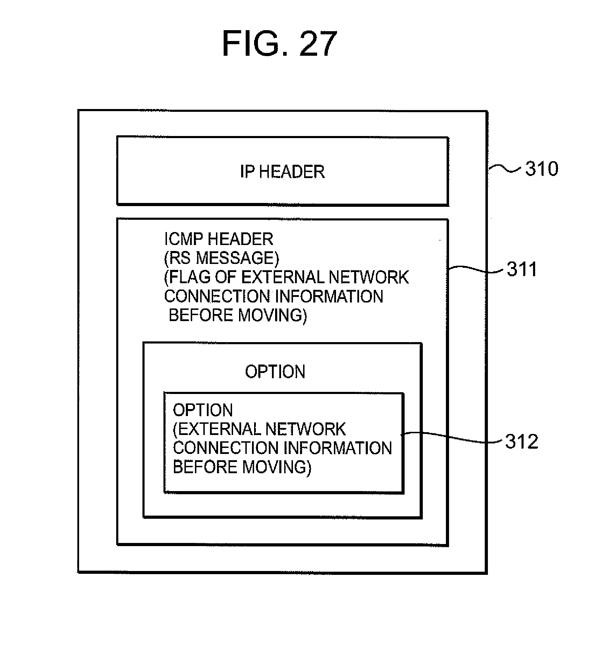

As a result, if the network before moving was the external network, information (hereinafter external network connection information before moving, such as a flag) indicating that the network before moving was the external network, i.e., that the network before moving did not provide any network-based mobility control protocol is added into the RS message to generate. For example, when the receiving the notification from the connecting network information holding section 813 that the network to connect has been changed after the IF11 or IF22 performed handover, and recognizing that it has connected to the home network, the RS transmission processing section 807 checks the network information before moving holding section 806, and recognizes that the network before mobile was the external network. Then, the RS transmission processing section 807 generates the RS message including the external network connection information before moving, and transmits it to the proxy node 31. As the message for notifying the external network connection information before moving, an NS message, a DHCP request message, an authentication request message, a BU message, etc. may be used. As shown in FIG. 27, the external network connection information before moving in the RS message transmitted by the MN 10 may be included as a flag in a header section 311 of the RS message 310, or included in a new option 312.

In this case, the proxy node 31 that has received this RS message transmits, to the HA 32, a proxy BU message to which the external network connection information before moving notified from the MN 10 is added. Like the home network connection information before moving in FIG. 24, the external network connection information before moving in the proxy BU message transmitted by the proxy node 31 may be included as a flag or the like in the mobility header 301 or the alternative CoA option 303, or included in the option 304 including a BID. A flag located in the same location as the home network connection information before moving may be so used that, when the flag is set, it indicates the home network connection information before moving, while when the flag is not set, it indicates the external network connection information before moving, and vise visa.

The HA 32 that has received this proxy BU message recognizes from the external network connection information before moving in the message that the location information before moving of the MN 10 is the location information registered by the MN 10 itself, so that the HA 32 can specify the location information registered by the MN 10 as the target to be replaced by the location information after moving included in the proxy BU message from the proxy node 31. The HA 32 replaces the specified location information by the new location information, and transmits a proxy BA message as a response message to this proxy BU message in such a manner to include therein information indicative of the success of the replacement as information indicative of the result of replacement of the location information.

Further, as mentioned in the first embodiment of the present invention, the proxy node 31 may use the proxy BU message including the external network connection information before moving to request the BID used for registration of location information on the IF22 of the MN 10. In this case, the HA 32 that has received the proxy BU message including the external network connection information before moving acquires, from the BC, the BID added to the location information before moving of the MN 10 specified using the external network connection information before moving, and notifies the proxy node 31 of the BID to the proxy node 31 by including it in the proxy BA message. When no BID is added to the location information before moving of the MN 10, or when there is no location information as the target to be replaced, HA 32 generates and transmits new BID by including it in the proxy BA message.

As a method of acquiring/generating a BID, the HA 32 may request acquisition/generation of the BID from the AAA server 50 or the information server holding information on the MN 10. As shown in FIG. 23, the BU message 300 in this case includes the option 304 for notification of a BID and whose field portion to include a BID is empty (zero value). This option 304 may be used as information indicative of a request for acquisition of a BID, or information (such as a flag) indicative of a request for acquisition of a BID may be added into the mobility header 301 or the option 304 for notification of a BID, or both may be combined. In addition, a flag indicative of a request for a BID may be included in the alternate CoA option 303. When the BID generated by the proxy node 31 is added in the proxy BU message from the proxy node 31, the HA 32 holds location information after moving together with the BID, and transmits, to the proxy node 31, the BID by including it in the BA message together with information indicative of the success of the replacement as information indicative of the result of replacement of the location information. The proxy node 31 that has received this proxy BA message uses the BID included in the received proxy BA message for subsequent registration of location information on the IF22 of the MN 10.

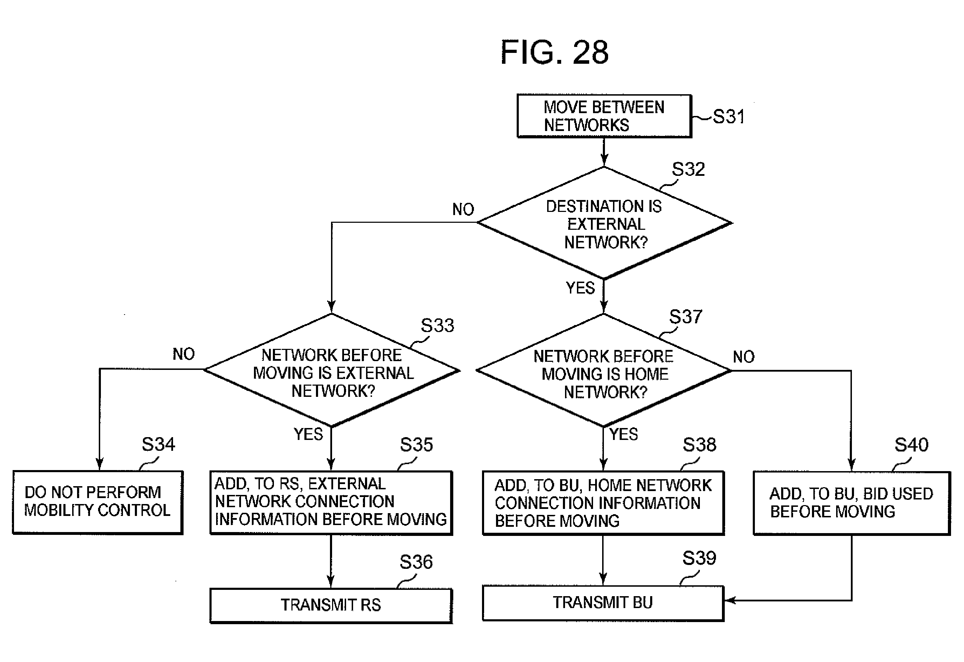

Determination processing shown in FIG. 28 will be described. When the MN 10 moves to another network (step S31), it is determined whether a destination network is an external network or the home network (step S2). Here, if the destination network is the home network (NO in step S32), processing proceeds to step S33 to be described later. On the other hand, if the destination network is an external network, it is determined whether the network before moving was the home network (step S37). Here, if the network before moving was the home network, the home network connection information before moving is added to the BU message to generate (step S38), and transmitted together with the location information (step S39). On the other hand, if the network before moving was not the home network, the BID used before moving is used to perform registration of location information in usual way (step S40).

In step S33, if the network before mobile was an external network, the external network connection information before moving is added to the RS message to generate (step S35), and transmitted (step S36). On the other hand, if the network before moving was the home network (NO in step S33), it is determined that the network-based mobility control protocol continues to be used without performing mobility control (step S34).

As another method, information (a flag or the like, hereinafter, IF home network connection information) indicating that the other IF (IF22) of the MN 10 is connecting to the home network, or that it is connecting to a network with a network-based mobility control protocol may be added into the BU message transmitted by the MN 10 for registration of location information on the IF 11 at the HA 32 before the IF 22 of the MN 10 performs handover from the network 30 to the network 20.

In this case, the HA 32 that has received this message holds the IF home network connection information in the BC together with the location information to register. Then, when receiving the BU message including new location information on the IF22 of the MN 10 after the IF22 of the MN 10 performs handover from the network 30 to the network 20, if no IF home network connection information is included in the message, the HA 32 recognizes that the MN 10 is not connected to the home network any more, i.e., that it has moved to a network (network 20) without any network-based mobility control protocol, so that the HA 32 can recognize that the target to be replaced by new location information included in the BU message from the MN 10 is the location information registered by the proxy node 31 or the location information to which no IF home network connection information is added.

The HA 32 that has received the BU message including the IF home network connection information from the MN 10 may add information (IF home network connection information) indicating that the IF22 of the MN 10 is connecting to the home network or a network with a network-based mobility control protocol to the location information registered by the proxy node 31 in the BC. In this case, when receiving the BU message including new location information on the IF22 from the MN 10, if no IF home network connection information is included in the message, the HA 32 recognizes that the MN 10 is not connected to the home network any more, i.e., that it has moved to a network (network 20) without any network-based mobility control protocol, so that the HA 32 can recognize that the target to be replaced by new location information included in the BU message from the MN 10 is the location information registered by the proxy node 31 or the location information to which no IF home network connection information is added. Upon specifying location information as the target to be replaced, the HA 32 may check if MAG registration information is added to the location information, and if added, it may determine that it is the location information as the target to be replaced.

The HA 32 not only replaces the specified location information by new location information, but also acquires, from the BC, the BID added to the location information as the target to be replaced and included in the BA message transmitted in response to this BU message, and transmits the BID by including it in the BA message. When no BID is added to the location information as the target to be replaced, or when the location information as the target to be replaced does not exist, new BID is generated and transmitted by including it in the BA message. As a method of acquiring/generating a BID, the HA 32 may request acquisition/generation of a BID from the AAA server 50 or the information server (not shown) holding information on the MN 10. Further, the HA 32 may hold information (MAG registration information) indicating that the location information replaced by the new location information registered in BC in response to the BU message from the MN 10 is the location information registered by the proxy node 31 before. This information is held without being erased even when the location information from the MN 10 is updated after that.

The BA message processing section 811 shown in FIG. 26 performs processing for receiving the BA message as a response message to the BU message generated and transmitted by the Binding Update message generating section 805. For example, when the IF22 of the MN 10 has performed handover from the network 30 to the network 20, information indicative of the success of replacement of the location information before moving, registered by the proxy node 31, by the location information after moving is included in the BA message. Further, if the BID used for subsequent registration of location information on the IF22 is included, the registered location information holding section 812 is instructed to hold the registered location information together with the BID.

The RA processing section 811 performs processing related to an RA message received from the network currently connected, and passes, to the connecting network information holding section 813, information for specifying the network currently connected, such as prefix information included in the RA message, and instructs the connecting network information holding section 813 to hold it. The connecting network information holding section 813 compares the connecting network information passed from the RA processing section 810 with connecting network information held in itself, and when both differ, it determines that the connected network has been changed, and notifies the BU message generating section 805 and the RS transmission processing section 807 that the connected network has been changed. The connecting network information holding section 813 also passes, to the network information before moving holding section 812, the connecting network information before changed, and instructs the network information before moving holding section 812 to hold it. The registered location information holding section 812 holds location information registered by the MN 10 at the HA 32 and with the communication partner. It functions as a BUL (binding update list) in a mobile IP.

The access authentication processing section 809 receives a notification from the network connection detecting section 808 that it has connected to an access network, transmits, to the network, an access authentication request for starting an authentication process for the network, and receives the authentication result from the network. If the authentication result indicates permission of connection of the MN 10, the RS transmission processing section 807 is notified of completion of authentication. For access authentication, a method such as IEEE802.1x or IEEE802.11 i is employed, and as an authentication method, EAP-MD5, EAP-TLS, EAP-TTLS, EAP-PEAP, or the like is employed. Although the access authentication request message generated by the access authentication section 809 has no particular new information, it is a message to act as a trigger for the authentication request message transmitted by the proxy node 31, and further to trigger BID allocation by the AAA server after that.

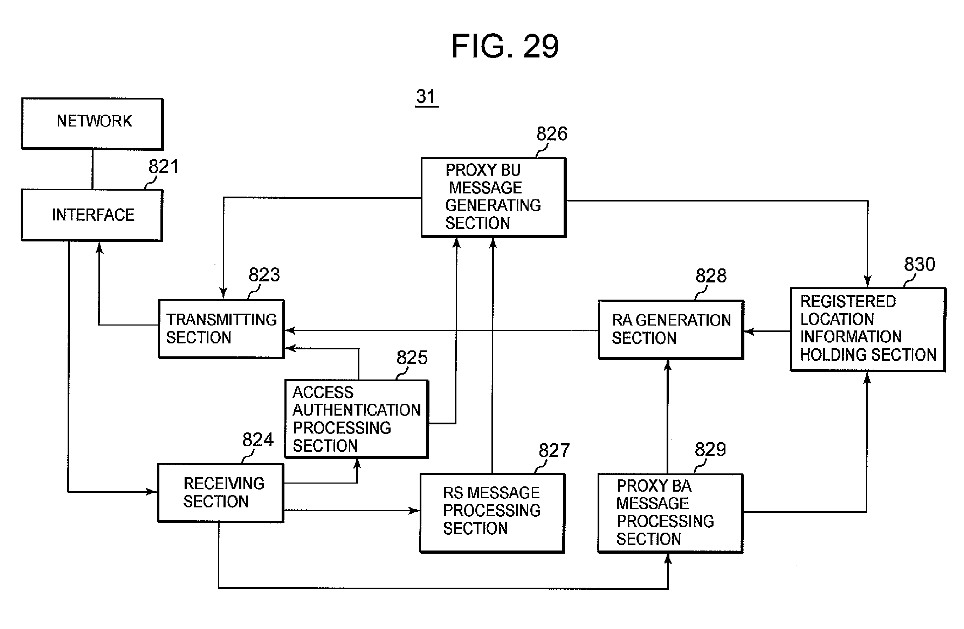

FIG. 29 is a diagram showing the structure of the proxy node 31 in the seventh embodiment of the present invention. The proxy node 31 has an interface 821 as a communication interface with a network, a transmitting section 823, a receiving section 824, an access authentication processing section 825, a proxy BU message generating section 826, an RS message processing section 827, an RA generation section 828, a proxy BA message processing section 829, and a registered location information holding section 830. The transmitting section 823 and the receiving section 824 have the function of transmitting/receiving packets through the interface. The access authentication processing section 825 processes an access authentication message from the MN 10, and transfers it to the AAA server 50 to request authentication of the MN 10. Then, the access authentication processing section 825 receives, from the AAA server 50, a response message including the result of authentication of the MN 10, and returns the result to the MN 10.

After completion of authentication of the MN 10, the proxy BU message generating section 826 receives an instruction from the access authentication processing section 825 to generate a proxy BU message for registering, at the HA 32, information in which an address of the proxy node 31 itself is associated with a home prefix of the MN 10 as location information of the MN 10, and to instruct the transmitting section 823 to transmit the proxy BU message. The home prefix of the MN 10, the address of H 32 as a registration destination, etc. can be acquired by querying the information server (not shown) holding management information on the MN 10. The proxy BU message generating section 826 also receives an instruction from the RS message processing section 827 to generate, as location information of the MN 10, a proxy BU message including external network connection information before moving together with the information in which the address of the proxy node 31 itself is associated with the home prefix of the MN 10 as location information of the MN 10, and to instruct the transmitting section 823 to transmit it to the HA 32.

A proxy BU message without specifying the home prefix may be transmitted to request the HA 32 for allocation of the home prefix of the MN 10. The proxy BU message in this case includes an option for notification of the prefix and whose field portion to include the home prefix is empty (zero value) so that this option may be used as information for requesting allocation of the home prefix. An identifier (NAI: Network Access Identifier) of the MN 10 may also be included in the proxy BU message. Further, a BID may be generated and transmitted by adding it to the proxy BU message in order to distinguish from other pieces of location information of the MN 10 registered at the HA 32. In addition, the BU message may be transmitted without specifying the BID to request BID allocation as mentioned above.

The proxy BA message processing section 829 performs processing related to the proxy BA message received as a response to the proxy BU message generated and transmitted by the proxy BU message generating section 826, acquires the registration result of the location information included in the proxy BA message, passes, to the registered location information holding section 830, the location information registered successfully, and instructs the registered location information holding section 830 to hold it. When the result indicative of the success of registration using the external network connection information before moving is included, an instruction is also given to hold that information. The registered location information holding section 830 may also be instructed to hold information indicative of the failure of the registration to use it as information indicating that it does not correspond to the home network connection information before moving and the external network connection information before moving.

In the case of the success of the registration of the location information on the MN 10, the proxy BA message processing section 829 instructs the RA generation section 828 to generate and transmit an RA message including the home prefix of the MN 10. When the result indicative of the success of the registration using the external network connection information before moving is included in the proxy BA message, an instruction is given to generate an RA message including, together with the home prefix of the MN 10, information indicative of the success of the registration using the external network connection information before moving. Further, when the BID is included in the received proxy BA message, the proxy BA message processing section 829 transmits the proxy BU message by adding the BID therein upon subsequent registration of location information.

The RS message processing section 827 performs processing related to the RS message received from the MN 10, and instructs the RA generation section 828 to generate and transmit an RA message including the home prefix of the MN. When external network connection information before moving is included in the RS message received from the MN 10, the RS message generating section 827 instructs the proxy BU message generating section 826 to generate a proxy BU message including the external network connection information before moving together with information, as location information on the MN 10, in which the address of the proxy node 31 itself is associated with the home prefix of the MN 10. If the access authentication request message is used as a message for notifying the external network connection information before moving, the access authentication processing section 825 givens the same instruction to the proxy BU message generating section 826.

The RA generation section 828 receives an instruction from the proxy BA message processing section 829 that has received the proxy BA message as a response to the proxy BU message to generate an RA message including the passed home prefix of the MN 10, and to instruct the transmitting section 823 to transmit it to the MN 10. When notified, from the proxy BA message processing section 829, of the success of the registration using the external network connection information before moving, the RA generation section 828 generates an RA message including information indicative of the success of the registration using the external network connection information before moving together with the home prefix of the MN 10, and instructs the transmitting section 823 to transmit it to the MN 10. The registered location information holding section 830 receives an instruction from the proxy BA message processing section 829 to hold information about the location information on the MN 10 registered at the HA 31 and a communication partner.

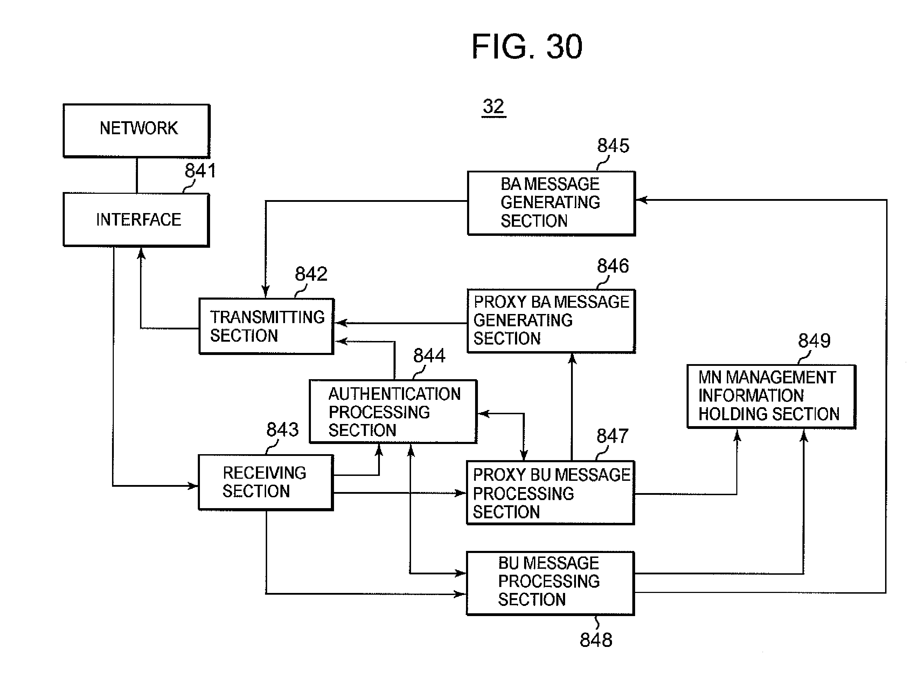

FIG. 30 is a block diagram showing the structure of the HA 32 in the seventh embodiment of the present invention. The HA 32 has an interface 841, a transmitting section 842, a receiving section 843, an authentication processing section 844, a BA message generating section 845, a proxy BA (Binding Acknowledgement) message generating section 846, a proxy BU (Binding Update) message processing section 847, a BU (Binding Update) message processing section 848, and an MN management information holding section 849. The transmitting section 842 and the receiving section 843 have the function of transmitting/receiving packets through the interface 841.

The authentication processing section 844 receives an instruction from the proxy BU message processing section 847 to transmit, to AAA server 50, an authentication request message for authentication of the proxy node 31 that has transmitted the proxy BU message. It also receives an instruction from the BU message processing section 848 to transmit, to the AAA server 50, the authentication request message for authentication of the MN 10 that has transmitted the BU message. Then, the authentication processing section 844 receives, from AAA server 50, an authentication response message including the authentication results of the proxy node 31 and the MN 10, and notifies the results to the proxy BU message processing section 847 and the BU message processing section 848.

The proxy BU message processing section 847 performs processing related to the proxy BU message transmitted from the proxy node 31, acquires the location information of the MN 10 included in the message, and instructs the MN management information holding section 849 to hold it. When the external network connection information before moving is included in the message, the proxy BU message processing section 847 determines that the location information before moving as the target to be replaced is the location information registered by the MN 10, and replaces the location information specified as the result by new location information. Then, it instructs the proxy BA message generating section 846 to generate a proxy BA message including information indicating that registration by replacement has been made correctly. When the BID is added to the location information as the target to be replaced, the proxy BU message processing section 847 instructs the proxy BA message generating section 846 to generate a proxy BA message including the BID together with the information indicating that registration by replacement has been made correctly.

When the BID specified by the proxy node 31 is included in the received proxy BU message together with the external network connection information before moving, the proxy BU message processing section 847 instructs the proxy BA message generating section 846 to generate a proxy BA message including the BID together with the information indicating that registration by replacement has been made correctly. Further, when no BID is included in the received proxy BU message, or when no BID is added to the location information as the target to be replaced, the newly generated BID may be added. Further, if the authentication of the proxy node 31 that has transmitted the proxy BU message is necessary, the authentication processing section may perform the authentication of the proxy node 31, and in the case of the success of the authentication, it may perform the above-mentioned processing.

The BU message processing section 848 performs processing related to the BU message transmitted from the MN 10, acquires the location information of the MN 10 included in the message, and instructs the MN management information holding section 849 to hold it. When the home network connection information before moving is included in the received BU message, since the BU message processing section 848 can recognize that the MN 10 has already moved to the home network, i.e., to a network without any network-based mobility control protocol, it determines that the location information before moving used as the target to be replaced is the location information registered by the proxy node 31, and replaces the location information specified as the result by new location information. Then, it instructs the BA message generating section 845 to generate a BA message including information indicating that registration by replacement has been made correctly. Further, when the BID is added to the location information as the target to be replaced, the BU message processing section 848 instructs the BA message generating section 845 to generate a proxy BA message including the BID together with the information indicating that registration by replacement has been made correctly.

When the BID specified by the MN 10 specified is included in the received BU message, the BU message processing section 848 instructs the BA message generating section 845 to generate a BA message including the BID together with information indicating that registration of the location information has been made correctly. Further, when no BID is included in the received BU message, or when no BID is added to the location information as the target to be replaced, the newly generated BID may be added. If the authentication of the MN 10 that has transmitted the BU message is necessary, the BU message processing section 848 instructs the authentication processing section 844 to perform authentication of the MN 10, and in the case of the success of the authentication, it may perform the above-mentioned processing.

The proxy BA message generating section 846 receives an instruction from the proxy BU message processing section 847 or the authentication processing section 844 to generate a proxy BA message including information indicative of the result of registration of the location information on the MN 10, and to instructs the transmitting section 842 to transmit it to the proxy node 31. When the BID is passed from the proxy BU message processing section 847, it generates a proxy BA message also including the BID. When the registration of the location information has been made using the external network connection information before moving notified from the proxy node, the proxy BA message generating section 846 may use information indicative of the success of replacement using the external network connection information before moving.

The BA message generating section 845 receives an instruction from the BU message processing section 848 or the authentication processing section 844 to generate a BA message including information indicative of the result of registration of the location information on the MN 10, and to instruct the transmitting section 842 to transmit it to the MN 10. When the BID is passed from the BU message processing section 848, a BA message also including the BID is generated. When the registration of the location information is made using the home network connection information before moving notified from the MN 10, the BA message generating section 845 may use information indicative of the success of replacement using the home network connection information before moving.

The MN management information holding section 849 receives instructions from the proxy BU message processing section 847 and the BU message processing section 848 to hold location information on the MN 10 notified from the proxy node 31 and the MN 10. The MN management information holding section 849 may also hold, in the new location information registered, information (MAG registration information) indicating that the location information before moving, which was replaced by the new location information, is the location information registered by the proxy node 31. This information is held without being erased even when the location information from the MN 10 is updated after that. When the proxy BU message including the external network connection information before moving is received from the proxy node 31, it can be determined that the location information to which this MAG registration information is added is the information registered by the MN 10 and corresponding to the location information previously registered by the proxy node 31. In other words, the location information replaced once by the MN 10 can be replaced by the proxy node 31. As shown in FIG. 24, the home network connection information before moving may be included as a flag or the like in the mobility header 301 or the alternative CoA option 303, or included in the option 304 including a BID.

Like in the description of the fifth embodiment, when the IF22 has performed handover from the network 30 with the network-based protocol 30 to the network 20 in this embodiment, if the network 40a with the network-based protocol, to which the interface IF11 is connecting, and the network base 30 to which the IF22 was connected have the same domain, the binding update message transmitted from the mobile node 10 may include identification information (such as MAC address) for specifying the interface IF11 of the mobile node 10.
As described in the seventh embodiment of the present invention, even if the MN 10 moves from a network with a network-based mobility control protocol to a network without any network-based mobility control protocol, since location information registered by the proxy node before moving is updated, external network information before moving is notified to the HA with the BU message transmitted, thereby enabling updating of the location information registered by the proxy node to new location information.

### <Eighth Embodiment>

In an eighth embodiment of the present invention, handover of the MN 10 is performed from the network 20 without any network-based mobility control protocol to the network 30 with the network-based mobility control protocol. Since the network configuration in the eighth embodiment of the present invention is the same as the configuration in the fourth embodiment of the present invention described with reference to FIG. 10 by, the description thereof will be omitted. Further, since the structure of and processing by each entity is already described in the seventh embodiment, the description thereof will also be omitted here.

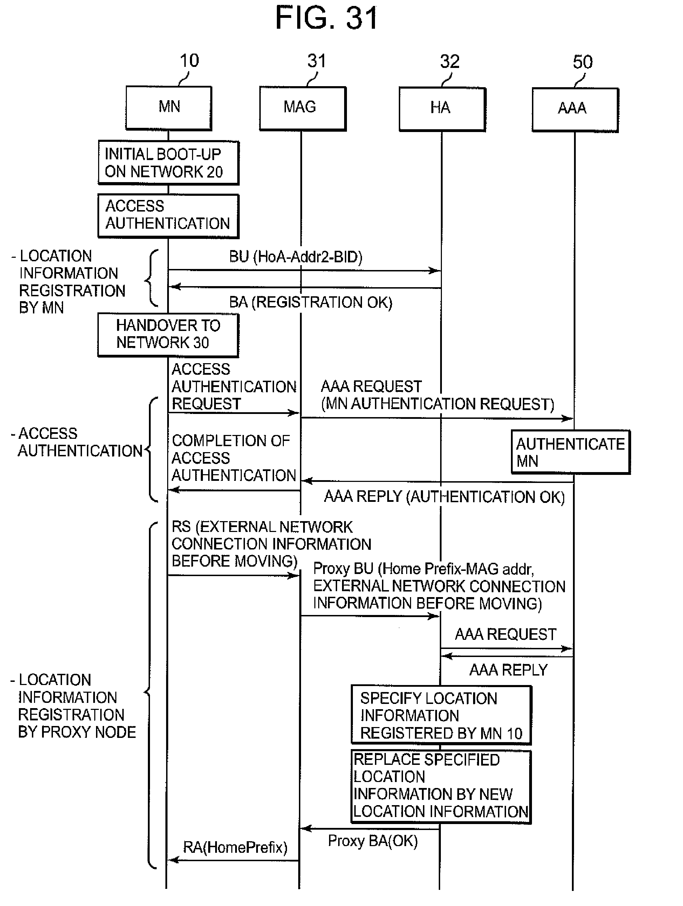

FIG. 31 shows a communication sequence as a sequence in the eighth embodiment of the present invention when the MN 10 has performed handover to the network 30 after initially booted on the network 20 and the location information was registered.
(1) Location information registration by MN
   - When initially booted on the network 20, the MN 10 registers location information at the HA 32 after access authentication.
(2) Access authentication
   - When moving to the network 30, the MN 10 transmits an access authentication request to the proxy node 31.
   - When receiving the access authentication request from the MN 10, the proxy node 31 transmits an MN authentication request in the form of a AAA request to the AAA (Authentication, Authorization, Accounting) server 50.
   - When receiving the AAA request (MN authentication request) from the proxy node 31, the AAA server 50 performs an MN authentication process, and notifies the proxy node 31 of authentication OK with a AAA replay.
   - When receiving the AAA reply from the AAA server 50, the proxy node 31 notifies the MN 10 of completion of the access authentication.

(3) Location information registration by proxy node
   - After completion of the access authentication, the MN 10 determines that the network 20 connected before moving was an external network, and transmits information (hereinafter, external network connection information before moving), which indicates that it was connecting to the external network before moving, to the proxy node 31 by adding it to the RS message.
   - When receiving the RS message from the MN 10, the proxy node 31 confirms that the external network connection information before moving is included in the message, and transmits, to the HA 32, a proxy BU message including the external network connection information before moving.
   - When receiving the proxy BU message from the proxy node 31, the HA 32 transmits a AAA request to the AAA server 50. The AAA server 50 receives the AAA request and transmits a AAA reply to the HA 32, thereby performing a proxy node authentication process. If the authentication of the proxy node 31 is unnecessary, transmission of the AAA request may be omitted.

- When receiving the AAA reply from the AAA server 50, the HA 32 confirms that the external network connection information before moving is present in the BU message, and determines that the target to be replaced by new location information is the location information registered by the MN 10. Then, the HA 32 specifies the location information registered by the MN from among the pieces of location information on the MN 10 already registered, and replaces it by new location information after moving. The HA may check whether there is location information to which MAG registration information to be described later is added into the location information of the MN 10 to specify location information as the target to be replaced. Then, the HA 32 transmits, to the proxy node 31, a proxy BA message including the result of registration of location information.

If the MN 10 mentioned in the seventh and eighth embodiments is connecting simultaneously to plural proxy nodes managed by the HA 32, use of the link identifier mentioned in the fifth and sixth embodiments can be used to specify location information.
As described in the eighth embodiment of the present invention, even when the MN 10 has performed handover from a network without any network-based mobility control protocol to a network with a network-based mobility control protocol, since the proxy node updates the location information registered by the MN 10 before moving, external network connection information before moving is notified to the HA with the transmitted proxy BU message to enable updating of the location information registered by the MN 10 to new location information.

Note that each of the functional blocks used in describing the aforementioned embodiments is implemented as an LSI (Large Scale Integration) typified by an integrated circuit. Each of them may be made up of one chip individually, or they may be made up of one chip to include some or all of them. Here, although the LSI is assumed, it may be called an IC (Integrated Circuit), a system LSI, a super LSI, or an ultra LSI depending on the degree of integration. Further, the technique for creation of an integrated circuit is not limited to LSI, and it may be implemented by a private circuit or a general-purpose processor. An FPGA (Field Programmable Gate Array) capable of programming after LSI manufacturing or a reconfigurable processor capable of reconfiguring connections or settings of circuit cells within the LSI may also be employed. In addition, if integrated circuit technology capable of replacing LSI emerges with development of semiconductor technology or another technology derived therefrom, the technology may be used to integrate the functional blocks. For example, applications of biotechnology may be possible.

### INDUSTRIAL APPLICABILITY

The present invention has the advantage of being capable of acquiring a binding ID when a mobile node performs handover to a second network without any network-based protocol after the binding ID of the mobile node is set for a proxy node by initial boot-up or the like on a first network with a network-based protocol. The present invention can be employed for a 3GPP network such as a cellular network as the network without any network-based protocol and a non-3GPP network such as wireless LAN as the network with the network-based protocol.

## Claims

1. A communication method of acquiring a binding ID when a mobile node performs handover to a second network without any network-based mobility control protocol after a binding ID of the mobile node to connect to a first network with a network-based mobility control protocol is set for a proxy node of the first network, the method comprising:
a step in which the mobile node transmits a binding ID allocation request message to the proxy node of the first network;
a step in which the proxy node receives the binding ID allocation request message and transmits the binding ID allocation request message to a management node for managing the binding ID;
a step in which the management node receives the binding ID allocation request message, generates and stores the binding ID, and transmits the binding ID to the proxy node;
a step in which the proxy node receives the binding ID and transmits, to the mobile node, allocation information indicating that the binding ID is allocated;
a step in which the mobile node transmits a request message for the binding ID to the management node based on the allocation information when the mobile node performs handover from the first network to the second network;
a step in which the management node receives the request message for the binding ID from the mobile node; and
a step in which the management node transmits the binding ID to the mobile node.

2. A communication system for acquiring a binding ID when a mobile node performs handover to a second network without any network-based mobility control protocol after a binding ID of the mobile node to connect to a first network with a network-based mobility control protocol is set for a proxy node of the first network, the system comprising:
means for allowing the mobile node to transmit a binding ID allocation request message to the proxy node of the first network;
means for allowing the proxy node to receive the binding ID allocation request message and transmit the binding ID allocation request message to a management node for managing the binding ID;
means for allowing the management node to receive the binding ID allocation request message, generate and store the binding ID, and transmit the binding ID to the proxy node;
means for allowing the proxy node to receive the binding ID and transmit, to the mobile node, allocation information indicating that the binding ID is allocated;
means for allowing the mobile node to transmit a request message for the binding ID to the management node based on the allocation information when the mobile node performs handover from the first network to the second network;
means for allowing the management node to receive the request message for the binding ID from the mobile node; and
means for allowing the management node to transmit the binding ID to the mobile node.

3. A mobile node in a communication system for acquiring a binding ID when a mobile node performs handover to a second network without any network-based mobility control protocol after a binding ID of the mobile node to connect to a first network with a network-based mobility control protocol is set for a proxy node of the first network, the mobile node comprising:
means for transmitting, on the first network, a binding ID allocation request message to the proxy node of the first network;
means for receiving allocation information after the proxy node receives the binding ID allocation request message and transmits the binding ID allocation request message to a management node for managing the binding ID, the management node receives the binding ID allocation request message, generates and stores the binding ID, and transmits the binding ID to the proxy node, and the proxy node receives the binding ID and transmits, to the mobile node, allocation information indicating that the binding ID is allocated;
means for transmitting a request message for the binding ID to the management node of the first network based on the allocation information when performing handover from the first network to the second network; and
means for receiving the binding ID when the management node receives the request message for the binding ID from the mobile node, and the management node transmits the binding ID to the mobile node.

4. A proxy node in a communication system for acquiring a binding ID when a mobile node performs handover to a second network without any network-based mobility control protocol after a binding ID of the mobile node to connect to a first network with a network-based mobility control protocol is set for a proxy node of the first network, the proxy node comprising:
means for receiving a binding ID allocation request message and transmitting the binding ID allocation request message to a management node for managing the binding ID after the mobile node transmits, on the first network, the binding ID allocation request message to the proxy node of the first network; and
means for receiving the binding ID and transmitting, to the mobile node, allocation information indicating that the binding ID is allocated after the management node receives the binding ID allocation request message, generates and stores the binding ID, and transmits the binding ID to the proxy node.

5. The communication method according to claim 1, wherein
the binding ID allocation request message is a message for requesting access authentication of the mobile node, and
the allocation information transmitted by the proxy node and indicating that the binding ID is allocated is a DHCP reply message.

6. A communication method of acquiring a binding ID when a mobile node performs handover to a second network without any network-based mobility control protocol after a binding ID of the mobile node to connect to a first network with a network-based mobility control protocol is set for a proxy node of the first network, the method comprising:
a step in which the mobile node transmits, on the first network, a binding ID request message to the proxy node of the first network;
a step in which the proxy node receives the binding ID request message and transmit the binding ID request message to a management node for managing the binding ID;
a step in which the management node receives the binding ID request message, and generates and transmits the binding ID to the proxy node; and
a step in which the proxy node receives the binding ID and transmit the binding ID to the mobile node.

7. A communication system for acquiring a binding ID when a mobile node performs handover to a second network without any network-based mobility control protocol after a binding ID of the mobile node to connect to a first network with a network-based mobility control protocol is set for a proxy node of the first network, the system comprising:
means for allowing the mobile node to transmit, on the first network, a binding ID request message to the proxy node of the first network;
means for allowing the proxy node to receive the binding ID request message and transmit the binding ID request message to a management node for managing the binding ID;
means for allowing the management node to receive the binding ID request message, and generate and transmit the binding ID to the proxy node; and
means for allowing the proxy node to receive the binding ID and transmit the binding ID to the mobile node.

8. A mobile node in a communication system for acquiring a binding ID when the mobile node performs handover to a second network without any network-based mobility control protocol after a binding ID of the mobile node to connect to a first network with a network-based mobility control protocol is set for a proxy node of the first network, the mobile node comprising:
means for transmitting, on the first network, a binding ID request message to the proxy node of the first network; and
means for receiving the binding ID after the proxy node receives the binding ID request message and transmits the binding ID request message to a management node for managing the binding ID, the management node receives the binding ID request message, and generates and transmits the binding ID to the proxy node, and the proxy node receives the binding ID and transmits the binding ID to the mobile node.

9. A proxy node in a communication system for acquiring a binding ID when a mobile node performs handover to a second network without any network-based mobility control protocol after a binding ID of the mobile node to connect to a first network with a network-based mobility control protocol is set for a proxy node of the first network, the proxy node comprising:
means for receiving a binding ID request message and transmitting the binding ID request message to a management node for managing the binding ID after the mobile node transmits, on the first network, the binding ID request message to the proxy node of the first network; and
means for receiving the binding ID and transmitting the binding ID to the mobile node after the management node receives the binding ID request message, and generates and transmits the binding ID to the proxy node.

10. The communication method according to claim 6, wherein
the binding ID request message is a message for requesting access authentication of the mobile node, and
the binding ID transmitted by the proxy node is included in a DHCP reply message.

11. A communication method in which a proxy node of a first network with a network-based mobility control protocol acquires a binding ID when a mobile node performs handover to the first network after a binding ID of the mobile node is assigned on a second network without any network-based mobility control protocol, the method comprising:
a step in which the mobile node transmits, on the second network, a binding ID request message to a management node for managing the binding ID of the first network;
a step in which the management node receives the binding ID request message, and generates and stores the binding ID;
a step in which the mobile node transmits a binding ID acquisition request message to the proxy node of the first network when performing handover from the second network to the first network;
a step in which the proxy node receives the binding ID acquisition request message and transmits the binding ID acquisition request message to the management node; and
a step in which the management node receives the binding ID acquisition request message and transmits the stored binding ID to the proxy node.

12. A communication system in which a proxy node of a first network with a network-based mobility control protocol acquires a binding ID when a mobile node performs handover to the first network after a binding ID of the mobile node is assigned on a second network without any network-based mobility control protocol, the system comprising:
means for allowing the mobile node to transmit, on the second network, a binding ID request message to a management node for managing the binding ID of the first network;
means for allowing the management node to receive the binding ID request message, and generate and store the binding ID,
means for allowing the mobile node to transmit a binding ID acquisition request message to the proxy node of the first network when performing handover from the second network to the first network;
means for allowing the proxy node to receive the binding ID acquisition request message and transmit the binding ID acquisition request message to the management node; and
means for allowing the management node to receive the binding ID acquisition request message and transmit the stored binding ID to the proxy node.

13. A mobile node in a communication system in which a proxy node of a first network with a network-based mobility control protocol acquires a binding ID when the mobile node performs handover to the first network after a binding ID of the mobile node is assigned on a second network without any network-based mobility control protocol, the mobile node comprising:
means for transmitting, on the second network, a binding ID request message to a management node for managing the binding ID of the first network, wherein the management node receives the binding ID request message, and generates and stores the binding ID; and
means for transmitting a binding ID acquisition request message to the proxy node of the first network when performing handover from the second network to the first network, wherein the proxy node receives the binding ID acquisition request message and transmits the binding ID acquisition request message to the management node, and the management node receives the binding ID acquisition request message and transmits the stored binding ID to the proxy node.

14. A proxy node in a communication system in which the proxy node of a first network with a network-based mobility control protocol acquires a binding ID when a mobile node performs handover to the first network after a binding ID of the mobile node is assigned on a second network without any network-based mobility control protocol, the proxy node comprising:
means for receiving a binding ID acquisition message after the mobile node transmits, on the second network, the binding ID acquisition message to a management node for managing the binding ID of the first network, the management node receives the binding ID acquisition message, and generates and stores the binding ID, and the mobile node performs handover from the second network to the first network; and
means for receiving the binding ID after the management node receives the binding ID acquisition message and transmits the stored binding ID to the proxy node.

15. The communication method according to claim 11,
wherein the binding ID acquisition request message is a message for requesting access authentication of the mobile node.

16. The communication method according to claim 6,
wherein when the proxy node transmits the binding ID to the mobile node, the proxy node transmits the binding ID with a DHCP reply message responding to a DHCP response message.

17. The communication method according to claim 6,
wherein when the proxy node transmits the binding ID to the mobile node, the proxy node transmits an access authentication complete message responding to an access authentication request message from the mobile node.

18. A communication method of replacing location information when a first interface of a mobile node, connectable to a first network with a network-based mobility control protocol and a second network without any network-based mobility control protocol, performs handover to the second network after the location information is registered by a proxy node while the first interface of the mobile node is connecting to the first network, the method comprising:
a step of transmitting, to a management node for managing the location information, a binding update message for requesting replacement of the location information, with home network connection information before moving added thereto, the home network connection information before moving indicating that the network before moving was a home network, when the first interface of the mobile node performs handover from the first network to the second network; and
a step of allowing the management node that has received the binding update message to transmit, to the mobile node, a binding ID corresponding to the replaced location information.

19. A communication system for replacing location information when a first interface of a mobile node, connectable to a first network with a network-based mobility control protocol and a second network without any network-based mobility control protocol, performs handover to the second network after the location information is registered by a proxy node while the first interface of the mobile node is connecting to the first network, the system comprising:
means for transmitting, to a management node for managing the location information, a binding update message for requesting replacement of the location information, with home network connection information before moving added thereto, the home network connection information before moving indicating that the network before moving was a home network, when the first interface of the mobile node performs handover from the first network to the second network; and
means for allowing the management node that has received the binding update message to transmit, to the mobile node, a binding ID corresponding to location information replaced.

20. A mobile node in a communication system for replacing location information when a first interface of the mobile node, connectable to a first network with a network-based mobility control protocol and a second network without any network-based mobility control protocol, performs handover to the second network after the location information is registered by a proxy node while the first interface of the mobile node is connecting to the first network, the mobile node comprising:
means for transmitting, to a management node for managing the location information, a binding update message for requesting replacement of the location information, with home network connection information before moving added thereto, the home network connection information before moving indicating that the network before moving was a home network, when the first interface of the mobile node performs handover from the first network to the second network; and
means for receiving, from the management node that has received the binding update message, a binding ID corresponding to the replaced location information.

21. A management node for managing location information in a communication system for replacing the location information when a first interface of a mobile node, connectable to a first network with a network-based mobility control protocol and a second network without any network-based mobility control protocol, performs handover to the second network after the location information is registered by a proxy node while the first interface of the mobile node is connecting to the first network, the management node comprising:
means for receiving, from the mobile node, a binding update message for requesting replacement of the location information together with home network connection information before moving, which indicates that the network before moving was a home network, when the first interface of the mobile node performs handover from the first network to the second network; and means for transmitting, to the mobile node, a binding ID corresponding to the replaced location information.

22. The communication method according to claim 18,
wherein the mobile node further includes a second interface connectable to a third network with a network-based mobility control protocol, and when the first interface performs handover from the first network to the second network, if the third network to which the second interface is connecting has the same domain as the first network, the binding update message transmitted from the mobile node further includes identification information for identifying the first interface of the mobile node.
